# EUROPEAN PATENT SPECIFICATION

(11) **EP 3 009 222 B1**
(45) Date of publication and mention of the grant of the patent: **17.02.2021**
(21) Application number: 14847909.0
(22) Date of filing: 04.06.2014
(51) Int. Cl.: B23K 20/12

(54) **FRICTION STIRRING TOOL, FRICTION STIR WELDING DEVICE AND FRICTION STIR WELDING METHOD**
REIBRÜHRWERKZEUG, REIBRÜHRSCHWEISSVORRICHTUNG UND REIBRÜHRSCHWEISSVERFAHREN
OUTIL DE FRICTION-MALAXAGE, DISPOSITIF DE SOUDAGE PAR FRICTION-MALAXAGE ET PROCÉDÉ DE SOUDAGE PAR FRICTION-MALAXAGE

(30) Priority: 27.09.2013 JP 2013202758
(43) Date of publication of application: 20.04.2016
(73) Proprietor: Mitsubishi Heavy Industries, Ltd., Tokyo 108-8215 (JP)
(72) Inventor: SATO, Hiroaki, Tokyo 108-8215 (JP)
(74) Representative: Cabinet Beau de Loménie
(86) International application number: PCT/JP2014/064866
(87) International publication number: WO 2015/045490

(56) References cited:
- EP-A1- 1 386 688
- EP-A1- 2 502 698
- EP-A1- 2 527 074
- EP-A2- 1 361 014
- WO-A1-2011/061826
- JP-A- 2004 058 135
- US-A1- 2010 096 438
- US-A1- 2012 273 113
- US-A1- 2013 075 452

## Description

### Technical Field

The present invention relates to a friction stirring tool, according to the preamble of claim 1 (see, for example, EP 1 386 688 A1), a friction stir welding device, and a friction stir welding method which are used in friction stir welding.

### Background Art

In the related art, a friction stir welding device is known which uses upper and lower rotating tools to be inserted into a welding portion of a metal plate through a front surface and a rear surface thereof so that the upper and lower rotating tools perform friction stir welding on the metal plate (for example, refer to PTL 1). In the friction stir welding device, the upper and lower rotating tools have a cylindrical tool main body and a probe attached to a front end portion of the tool main body. Then, a shoulder portion is formed in the vicinity of an attachment portion of the probe in the front end portion of the tool main body. The friction stir welding device performs the friction stir welding in a state where a predetermined gap is provided between front ends of the probes of the upper and lower rotating tools.

In addition, a friction stir welding device is known which uses first and second rotating tools arranged to face each other on a front surface side and a rear surface side of a welding portion of a metal plate so that the first and second rotating tools perform friction stir welding on the metal plate (for example, refer to PTL 2). In the friction stir welding device, one of the first and second rotating tools has a tool main body in which a shoulder portion is formed in a front end portion, and a probe (protrusion) which is formed to protrude from the tool main body. The other has a tool main body in which a shoulder portion is formed in a front end portion, and a recess which accommodates the front end portion of the probe. The friction stir welding device performs the friction stir welding in a state where the protrusion of one rotating tool is inserted into the recess of the other rotating tool. Document PTL 3 is another example of known junction method and junction tool.

### Citation List

### Patent Literature

[PTL 1] Japanese Patent No. 4838385
[PTL 2] Japanese Patent No. 4838389
[PTL 3] European patent application EP 1386688

### Summary of Invention

### Technical Problem

However, in the friction stir welding device disclosed in PTL 1, the predetermined gap is provided between the front ends of the probes of the upper and lower rotating tools. For this reason, if the metal plate is thick, an absolute value increases in tolerance allowed by material standards. Consequently, the gap becomes larger, thereby causing a possibility of a defectively welded portion (non-welded portion) which is called a kissing bond. In particular, in a case of a material having poor flow properties at a welding temperature, such as aluminum alloys of 2,000 series or 7,000 series, the amount of the allowable gap is small, and thus this defect is likely to occur. Furthermore, when the welded metal plate is subjected to plastic processing, there is a possibility of damage such as cracks caused by the defectively welded portion.

In addition, in the friction stir welding device disclosed in PTL 2, the probe is disposed throughout a thickness direction of the metal plate. For this reason, if the metal plate is thick, it is necessary to lengthen the probe. If the probe is lengthened, a bending moment applied to the probe increases. Consequently, a load applied to the tool increases, thereby causing a possibility that the increased load may lead to damage to the tool. In addition, if a configuration is adopted which can withstand the load applied to the tool, it is necessary to increase a diameter of the probe. Therefore, a size of the rotating tool is forced to increase. Due to the increased size, it is necessary to increase a device structure of a shaft or a motor for driving the tool.

Therefore, the present invention aims to provide a friction stirring tool, a friction stir welding device, and a friction stir welding method, in which friction stir welding can be suitably performed on a welding portion of a metal material while a load applied to a tool is limited even if the thickness of the welding portion varies.

### Solution to Problem

A friction stirring tool according to the present invention is defined in claim 1.

According to this configuration, friction stir welding can be performed on the friction welding-target of the metal material by accommodating the protrusion of the first rotating tool in the protrusion accommodating portion of the second rotating tool, and by rotating the first rotating tool and the second rotating tool, while heat is transferred into the welding-target portion of the metal material from both sides of the welding-target portion. Therefore, even if the welding-target portion of the metal material is thick, an accommodation depth (insertion depth) for accommodating the protrusion in the protrusion accommodating portion is properly changed. Accordingly, friction stirring can be performed over the thickness of the welding-target portion by using the first probe, the second probe, and the protrusion. In this manner, a predetermined gap is not formed between the first probe and the second probe. Therefore, it is possible to limit the occurrence of a defectively welded portion. In addition, even if the welding-target portion of the metal material becomes thick, the accommodation depth for accommodating the protrusion in the protrusion accommodating portion may be changed. Accordingly, it is not necessary to change the length of the first probe and the second probe in a protruding direction thereof. Therefore, it is possible to limit an increase in a load applied to the tool. According to the above-described configuration, even if the thickness of the welding-target portion of the metal material varies, friction stir welding can be suitably performed on the welding-target portion, while the load applied to the tool is limited. Each rotation direction and rotation speed of the first rotating tool and the second rotating tool are optionally set.

In addition, it is preferable that a length of the protrusion in a protruding direction is equal to or smaller than 50%, compared to a combined length of the first probe and the protrusion in the protruding direction.

According to this configuration, the length of the protrusion can be shortened further than the length of the first probe. Accordingly, it is possible to decrease a bending moment applied to the protrusion. Therefore, it is possible to limit a load applied to the protrusion.

In addition, it is preferable that a rotation diameter of the protrusion is a diameter of 40% to 80%, compared to a rotation diameter on the first rotating tool side of the second probe.

According to this configuration, the protrusion accommodating portion is disposed in the second probe. In this manner, the thickness of a surrounding wall body of the protrusion accommodating portion formed on the first probe side of the second probe can be set to the thickness of 10% to 30% of the rotation diameter of the second probe. For example, if the rotation diameter of the protrusion is 80%, compared to the rotation diameter on the first rotating tool side of the second probe, the thickness of the surrounding wall body of the protrusion accommodating portion in which the protrusion is accommodated can be set to the thickness of 10% of the rotation diameter of the second probe. In addition, for example, if the rotation diameter of the protrusion is 40%, compared to the rotation diameter on the first rotating tool side of the second probe, the thickness of the surrounding wall body of the protrusion accommodating portion in which the protrusion is accommodated can be set to the thickness of 30% of the rotation diameter of the second probe. Therefore, it is possible to secure the thickness of the surrounding wall body of the protrusion accommodating portion formed on the first probe side of the second probe. In this manner, even if the protrusion comes into contact with the inner surface of the protrusion accommodating portion, the rigidity of the surrounding wall body of the protrusion accommodating portion formed on the first probe side of the second probe can be set to the rigidity which can withstand the contact between the protrusion and the inner surface of the protrusion accommodating portion.

In addition, it is preferable that a predetermined gap brought into a non-contact state is disposed between the protrusion and the inner surface of the protrusion accommodating portion in which the protrusion is accommodated.

According to this configuration, the protrusion and the inner surface of the protrusion accommodating portion can be brought into a non-contact state. Therefore, it is possible to decrease a load which is applied to the first rotating tool and the second rotating tool due to the contact.

In addition, it is preferable that the protrusion accommodating portion has a circular cross section which is taken along a plane orthogonal to a rotation axis of the second rotating tool.

According to this configuration, the protrusion accommodating portion has the circular cross section. Accordingly, even if the protrusion accommodating portion is rotated, a shape of the protrusion accommodating portion is not changed. Therefore, the protrusion accommodating portion can flexibly correspond to a shape of the protrusion. In this manner, even if there is a rotation difference between the first rotating tool and the second rotating tool, it is possible to adopt a configuration in which the protrusion accommodating portion is less likely to come into contact with the protrusion.

In addition, it is preferable that the protrusion has a polygonal cross section which is taken along a plane orthogonal to a rotation axis of the first rotating tool.

According to this configuration, the protrusion accommodating portion has the polygonal cross section. Accordingly, the protrusion can more suitably stir the welding-target portion which is softened by the friction.

In addition, it is preferable that if the thickness of the welding-target portion is the maximum presumed thickness, when the welding-target portion is welded, the first rotating tool and the second rotating tool are rotated in a state where at least a portion of the protrusion is accommodated in the protrusion accommodating portion.

According to this configuration, even if the welding-target portion has the maximum presumed thickness, the first rotating tool and the second rotating tool can be rotated in a state where the protrusion is accommodated in the protrusion accommodating portion. Therefore, there is no possibility that a gap may be generated between the two rotating tools.

In addition, it is preferable that an angle formed between a direction orthogonal to one side surface of the welding-target portion and the rotation axis of the first rotating tool and an angle formed between a direction orthogonal to the other side surface of the welding-target portion and the rotation axis of the second rotating tool are angles of 0° to 3°.

According to this configuration, if the above-described angle is 0°, the rotation axis of the first rotating tool can be orthogonal to one side surface of the welding-target portion. Similarly, the rotation axis of the second rotating tool can be orthogonal to the other side surface of the welding-target portion. Accordingly, the first shoulder portion and the second shoulder portion can be brought into parallel contact with both surfaces of the welding-target portion. Therefore, each shoulder portion can efficiently transfer heat into the welding-target portion. In addition, if the above-described angle is greater than 0°, the rotation axis of the first rotating tool and the rotation axis of the second rotating tool can be tilted to both surfaces of the welding-target portion. Accordingly, a shoulder surface of each shoulder portion in a tilted shape comes into contact with the surface (contact surface) of the welding-target portion. Therefore, the welding-target portion can be actively stirred.

In addition, according to the present invention, the protrusion is detachably fixed to the first probe.

According to this configuration, the protrusion can be replaced. Accordingly, when the protrusion is damaged, the damaged protrusion can be replaced with a new protrusion. In addition, in accordance with the thickness of the welding-target portion, a protrusion having a proper length can be selected and mounted thereon.

In addition, according to the present invention, the first probe further has a fixing hole for fixing the protrusion, and that the protrusion has a flange portion which protrudes outward from the fixing hole and which comes into contact with the first probe.

According to this configuration, in a state where the protrusion is fixed into the fixing hole, the flange portion can prevent the metal of the welding-target portion softened due to the friction from entering a gap between the fixing hole and the protrusion. In this manner, it is possible to prevent the fixing hole and the protrusion from being fixedly attached to each other by the metal.

In addition, it is preferable that the protrusion is configured to include a material whose rigidity is lower than that of the second probe.

According to this configuration, when the protrusion comes into contact with the protrusion accommodating portion of the second probe, the replaceable protrusion can absorb an impact made by the contact with the second probe.

In addition, it is preferable that multiple types of the protrusion are prepared so as to have different lengths in the protruding direction in accordance with the thickness of the welding-target portion.

According to this configuration, the protrusion having the length suitable for the thickness of the welding-target portion in the protruding direction can be selected and attached to the fixing hole of the first probe. Therefore, friction stir welding can be suitably performed by using the protrusion suitable for the thickness of the welding-target portion.

According to an example not being part of the present invention, the first rotating tool has a first insertion hole which is formed to penetrate the first probe along the rotation axis of the first rotating tool, and a protrusion pin which is movable inside the first insertion hole, and that the protrusion is a portion of the protrusion pin which protrudes from the first insertion hole.

According to this configuration, the protrusion pin can be moved inside the first insertion hole, and the protrusion pin can be accommodated in the protrusion accommodating portion. Therefore, if the thickness of the welding portion varies, it is possible to easily arrange the protrusion so as to have the length suitable for the length of the welding portion by changing a protrusion amount of the protrusion pin protruding from the first insertion hole. The protrusion pin may be rotated to follow the rotation speed and the rotation direction of the first rotating tool or the second rotating tool. Alternatively, the protrusion pin may be independently rotated. The rotation of the protrusion pin is not particularly limited.

According to an example not being part of the present invention, the protrusion accommodating portion is a second insertion hole which is formed to penetrate the second probe along the rotation axis of the second rotating tool, and into which a portion of the protrusion pin is inserted.

According to this configuration, the protrusion pin can be inserted into the second insertion hole. Accordingly, a depth of the protrusion pin inserted into the second insertion hole can be set to a suitable depth. In this case, since the protrusion pin is inserted into the first insertion hole and the second insertion hole, the protrusion pin becomes coaxial with the rotation axis of the first rotating tool and the rotation axis of the second rotating tool. Therefore, friction stir welding is performed without tilting the first rotating tool and the second rotating tool to the welding-target portion. In addition, if the protrusion pin is deeply inserted into the second insertion hole, the rotation axis of the first rotating tool and the rotation axis of the second rotating tool can be accurately aligned with each other. On the other hand, if the protrusion pin is shallowly inserted into the second insertion hole, even when the protrusion pin is slightly tilted, the protrusion pin is allowed to tilt inside the second insertion hole. Therefore, it is possible to limit a load applied to the protrusion pin.

According to an example not being part of the present invention, the second rotating tool further has an ejector pin which is movable inside the second insertion hole.

According to this configuration, after welding, even if the welding-target portion softened due to the friction partially enters the second insertion hole, the ejector pin pushes out the softened metal of the welding-target portion entering the second insertion hole after the welding is completed. In this manner, the softened metal can be discharged outward from the second insertion hole. Therefore, it is possible to prevent the welding-target portion from being fixedly attached thereto inside the second insertion hole.

According to an example not being part of the present invention, the protrusion pin and the first insertion hole are joined to each other by a spline.

According to this configuration, whereas the protrusion pin is allowed to move in the first insertion hole, the rotation of the protrusion pin can be synchronized with the rotation of the first rotating tool.

According to an example not being part of the present invention, the protrusion pin is rotatably inserted into the first insertion hole.

According to this configuration, the protrusion pin can be independently rotated without being synchronized with the first rotating tool. Accordingly, it is possible to independently control heat transferring of each shoulder portion and stirring of the protrusion. Therefore, the protrusion pin can be rotated so as to be suitable for friction stir welding in all regions of the welding-target portion of the metal material.

According to an example not being part of the present invention, a gap between the protrusion pin and the first insertion hole has a narrow front end side of the protrusion pin which is located on the second rotating tool, and has a wide rear end side of the protrusion pin.

According to this configuration, the gap between the protrusion pin and the first insertion hole has the narrow front end side of the protrusion pin. Accordingly, the protrusion pin can be accurately positioned on the front end side. On the other hand, the gap between the protrusion pin and the first insertion hole has the wide rear end side of the protrusion pin. Accordingly, the protrusion pin is allowed to be deformable. Therefore, it is possible to limit a load applied to the protrusion pin.

In addition, it is preferable that the welding-target portion is a groove portion which is formed by causing a pair of the metal materials having a plate shape to butt against each other.

According to this configuration, friction stir welding can be performed on a pair of the metal materials butting against each other.

A friction stir welding device according to the present invention includes the above-described friction stirring tool, a first pressing and rotating mechanism that rotates the first rotating tool in a state where the first shoulder portion of the first rotating tool of the friction stirring tool is pressed against one side surface of the welding-target portion, a second pressing and rotating mechanism that rotates the second rotating tool in a state where the second shoulder portion of the second rotating tool of the friction stirring tool is pressed against the other side surface of the welding-target portion, a first movement mechanism that moves the first rotating tool to the metal material along the welding-target portion of the metal material, a second movement mechanism that moves the second rotating tool to the metal material along the welding-target portion of the metal material, and a control unit that controls the first pressing and rotating mechanism, the second pressing and rotating mechanism, the first movement mechanism, and the second movement mechanism.

According to this configuration, even if the thickness of the welding-target portion of the metal material varies, friction stir welding can be suitably performed on the welding-target portion by using the above-described friction stirring tool, while the load applied to the tool is limited.

In addition, it is preferable that the first movement mechanism and the second movement mechanism move the first rotating tool and the second rotating tool in synchronization with each other along the welding-target portion of the metal material.

According to this configuration, the first rotating tool and the second rotating tool can be moved in synchronization with each other. Accordingly, it is possible to prevent the first rotating tool and the second rotating tool from being misaligned with each other due to the movement. Therefore, it is possible to prevent the protrusion and the protrusion accommodating portion in the friction stirring tool from coming into contact with each other.

In addition, it is preferable that the friction stir welding device further includes a tool load detector that detects a load of the friction stirring tool, and that based on a detection result of the tool load detector, the control unit controls at least one of the first pressing and rotating mechanism, the second pressing and rotating mechanism, the first movement mechanism, and the second movement mechanism so as to decrease the load applied to the friction stirring tool.

According to this configuration, when a load is applied to the friction stirring tool, the control unit controls at least one of the first pressing and rotating mechanism, the second pressing and rotating mechanism, the first movement mechanism, and the second movement mechanism so as to decrease the load applied to the friction stirring tool. In this manner, it is possible to limit the load applied to the friction stirring tool. Therefore, it is possible to prevent the protrusion and the protrusion accommodating portion in the friction stirring tool from coming into contact with each other.

In addition, it is preferable that the tool load detector has a first power load detector which detects a load applied to a power source of the first movement mechanism and a second power load detector which detects a load applied to a power source of the second movement mechanism, and that the control unit controls at least one of the first movement mechanism and the second movement mechanism so as to decrease a difference between the load detected by the first power load detector and the load detected by the second power load detector.

According to this configuration, the control unit controls at least one of the first movement mechanism and the second movement mechanism so as to decrease the difference between the loads applied to power sources of the first movement mechanism and the second movement mechanism. In this manner, it is possible to limit the load applied to the friction stirring tool. Therefore, it is possible to prevent the protrusion and the protrusion accommodating portion in the friction stirring tool from coming into contact with each other.

In addition, it is preferable that the tool load detector has a strain detector which detects a strain of the rotation axis of at least one of the first rotating tool and the second rotating tool, and that the control unit controls at least one of the first movement mechanism and the second movement mechanism so as to decrease the strain detected by the strain detector.

According to this configuration, the control unit controls at least one of the first movement mechanism and the second movement mechanism so as to decrease the strain of the rotation axis of at least one of the first rotating tool and the second rotating tool. In this manner, it is possible to limit the load applied to the friction stirring tool. Therefore, it is possible to prevent the protrusion and the protrusion accommodating portion in the friction stirring tool from coming into contact with each other.

In addition, it is preferable that the tool load detector has an operation sound detector which detects an operation sound of the friction stirring tool, and that the control unit controls at least one of the first movement mechanism and the second movement mechanism so as to decrease the operation sound detected by the operation sound detector.

According to this configuration, the control unit controls at least one of the first movement mechanism and the second movement mechanism so as to decrease the operation sound of the friction stirring tool. In this manner, it is possible to limit the load applied to the friction stirring tool. Therefore, it is possible to prevent the protrusion and the protrusion accommodating portion in the friction stirring tool from coming into contact with each other.

In addition, it is preferable that the tool load detector has a vibration detector which detects vibrations of at least one of the first rotating tool and the second rotating tool, and that if a vibration mode detected by the vibration detector is a load vibration mode when a load is applied to at least one of first rotating tool and the second rotating tool, the control unit controls at least one of the first movement mechanism and the second movement mechanism so that the vibration mode is switched to a vibration mode other than the load vibration mode.

According to this configuration, the control unit controls at least one of the first movement mechanism and the second movement mechanism so that the vibration mode is switched to a vibration mode other than the load vibration mode. In this manner, it is possible to limit the load applied to the friction stirring tool. Therefore, it is possible to prevent the protrusion and the protrusion accommodating portion in the friction stirring tool from coming into contact with each other.

According to the present invention, there is provided a friction stir welding method in which the friction stir welding device is used so as to weld the welding-target portion of the metal material. The friction stir welding method includes a rotating step of rotating the first rotating tool and the second rotating tool by inserting the first rotating tool into a through-hole previously formed to penetrate a welding starting point from one side of the through-hole, by inserting the second rotating tool into the through-hole from the other side of the through-hole, and by accommodating the protrusion of the first rotating tool in the protrusion accommodating portion of the second rotating tool, a position adjusting step of relatively adjusting each inserting position of the first rotating tool and the second rotating tool, a moving step of moving the first rotating tool and the second rotating tool by the first movement mechanism and the second movement mechanism along the welding-target portion of the metal material from the welding starting point to a welding end point, and an extracting step of extracting the first rotating tool and the second rotating tool from the welding-target portion in a state where the first rotating tool and the second rotating tool are rotated at the welding end point.

According to this configuration, even if the thickness of the welding-target portion of the metal material varies, friction stir welding can be suitably performed on the welding-target portion by using the above-described friction stirring tool, while the load applied to the tool is limited.

In addition, it is preferable that in the moving step, each position of the first rotating tool and the second rotating tool is relatively adjusted.

According to this configuration, not only in the position adjusting step but also in the moving step, it is possible to adjust the relative position of the first rotating tool and the second rotating tool. Therefore, it is possible to prevent the first rotating tool and the second rotating tool from coming into contact with each other, and it is possible to limit the load applied to the friction stirring tool.

In addition, it is preferable that the through-hole has an inner diameter so that one side gap between the first rotating tool and the through-hole is different from the other side gap between the second rotating tool and the through-hole.

According to this configuration, the rotating tool on the wide gap side is first inserted, and a hole is plugged on a shoulder surface of the shoulder portion of the rotating tool. Thereafter, a lateral wall of the hole is cut by the rotating tool on the opposite side, thereby filling a gap between the rotating tool on the opposite side and a through-hole. In this manner, it is possible to decrease the gap of the through-hole of a welding starting portion, and it is possible to improve a filling ratio of the through-hole filled with the metal material. Therefore, it is possible to prevent the welding starting portion from being defective or dented.

In addition, it is preferable that at least one of the welding starting point and the welding end point is located on a tab plate which is attached to the metal material.

According to this configuration, the through-hole formed at the welding starting point and the hole formed by extracting the first rotating tool and the second rotating tool at the welding end point can be formed on the tab plate without being formed on the metal material.

### Brief Description of Drawings

Fig. 1 is a schematic configuration view schematically illustrating a friction stir welding device according to a first example not being part of the present invention.
Fig. 2 is an explanatory view relating to a friction stirring tool according to first example.
Fig. 3 is a plan view illustrating an example of a shape of a first shoulder portion.
Fig. 4 is a plan view illustrating an example of the shape of the first shoulder portion.
Fig. 5 is a plan view illustrating an example of the shape of the first shoulder portion.
Fig. 6 is a plan view illustrating an example of each shape of a protrusion and a protrusion accommodating portion.
Fig. 7 is an explanatory view illustrating an example of a metal plate before friction stir welding is performed.
Fig. 8 is a flowchart of a friction stir welding method according to first example.
Fig. 9 is a schematic configuration view schematically illustrating a portion of a friction stir welding device according to a modification example of first example.
Fig. 10 is a schematic configuration view schematically illustrating a portion of a friction stir welding device according to the present invention.
Fig. 11 is a partially enlarged explanatory view of the friction stirring tool according to the present invention.
Fig. 12 is a schematic configuration view schematically illustrating a portion of a friction stir welding device according to a second example not being part of the present invention.
Fig. 13 is a schematic configuration view schematically illustrating a portion of a friction stir welding device according to a modification example of second example.

Hereinafter, embodiments according to the present invention will be described in detail with reference to the drawings. The present invention is not limited to the embodiments. In addition, configuration elements in the embodiments described below include elements which can be easily replaced by those skilled in the art or elements which are substantially identical.

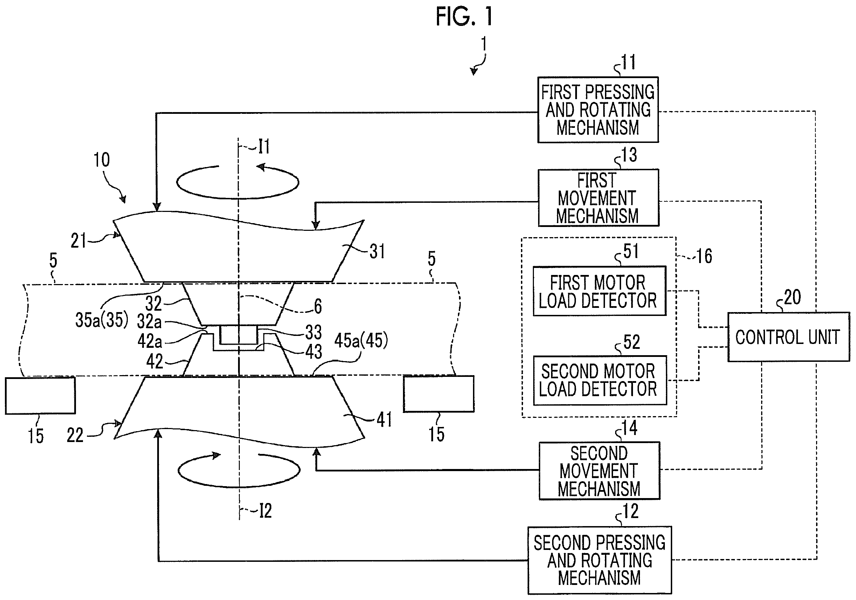

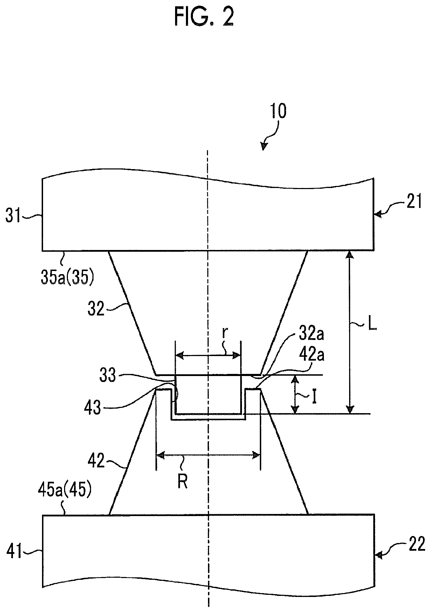

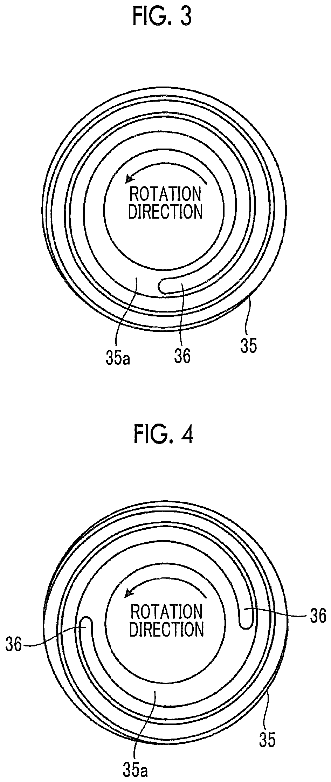

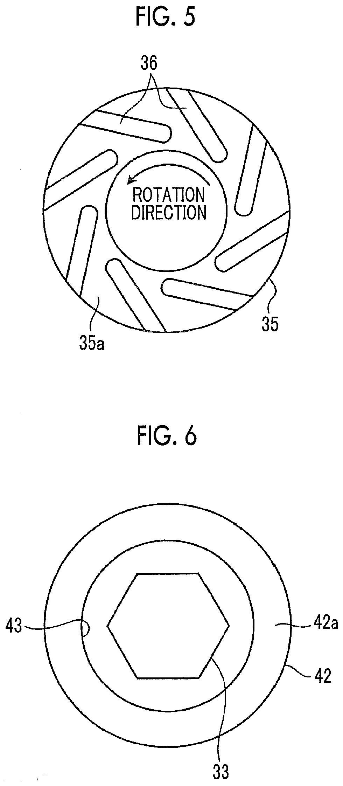

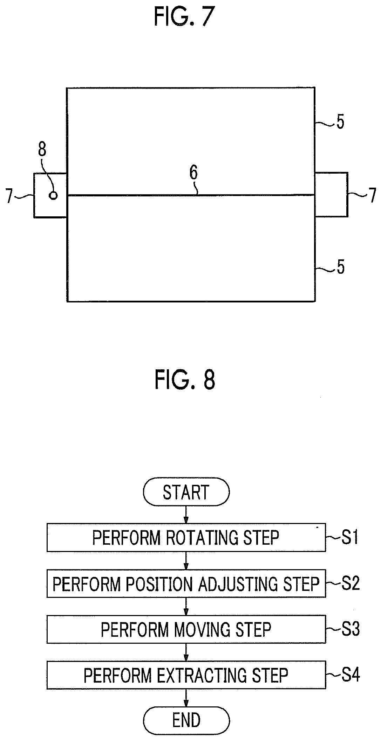

Fig. 1 is a schematic configuration view schematically illustrating a friction stir welding device according to a first example not being part of the present invention. Fig. 2 is an explanatory view relating to a friction stirring tool according to first example. Figs. 3 to 5 are plan views illustrating an example of a shape of a first shoulder portion. Fig. 6 is a plan view illustrating an example of each shape of a protrusion and a protrusion accommodating portion. Fig. 7 is an explanatory view illustrating an example of a metal plate before friction stir welding is performed. Fig. 8 is a flowchart of a friction stir welding method according to first example.

A friction stir welding device 1 according to first example is a device for performing so-called friction stir welding (FSW), in which a pair of rotating tools 21 and 22 arranged on front and rear surfaces of a groove portion 6 are used so as to weld a pair of metal plates 5 by performing friction stirring on a groove portion 6 formed by causing the pair of metal plates 5 to butt against each other. First, referring to Figs. 1 and 7, the pair of metal plates 5 which are welding-targets will be described.

For example, the metal plate 5 is configured to include an aluminum alloy, and is a large rectangular plate material whose one side is 2 m or greater. In addition, the metal plate 5 has a thickness of 15 mm or greater. As illustrated in Fig. 1, end surfaces of the pair of metal plates 5 are caused to butt against each other, thereby forming an I-shaped groove portion 6. Therefore, as illustrated in Fig. 7, the groove portion 6 is formed so as to linearly extend in a predetermined direction. In addition, in the pair of metal plates 5, tab plates 7 are respectively attached to both sides of the groove portion 6 which linearly extends. The pair of tab plates 7 on both sides of the groove portion 6 are attached to the pair of metal plates 5 by means of tack welding, thereby fixing mutual positions of the pair of metal plates 5. In this case, a welding starting point in the friction stir welding is located on one tab plate 7, and a welding end point is located on the other tab plate 7. Therefore, the friction stir welding is performed from one tab plate 7 toward the other tab plate 7 through the groove portion 6. Although details will be described later, a through-hole 8 into which the pair of rotating tools 21 and 22 are inserted is previously formed to penetrate the welding starting point on one tab plate 7.

The friction stir welding device 1 according to first example performs friction stir welding on the groove portion 6 in which the pair of metal plates 5 are caused to butt against each other. However, without being limited to this configuration, the friction stir welding may be performed on multiple metal plates 5 which are stacked on one another.

Here, the pair of metal plates 5 welded by the friction stir welding are handled as a large metal plate, and are subjected to plastic processing during the subsequent step. Therefore, if a defectively welded portion (kissing bond) is formed in a welding-target portion (groove portion 6) of the pair of metal plates 5 welded by the friction stir welding, there is a possibility of damage such as cracks or breakage caused by the defectively welded portion. In this regard, in order to prevent the defectively welded portion from being formed, the friction stirring welding device 1 according to first example adopts the following configuration.

Referring to Fig. 1, the friction stirring welding device 1 will be described. The friction stirring welding device 1 illustrated in Fig. 1 performs friction stir welding from both sides in the thickness direction of the groove portion 6. The friction stirring welding device 1 includes a friction stirring tool 10, a first pressing and rotating mechanism 11, a second pressing and rotating mechanism 12, a first movement mechanism 13, a second movement mechanism 14, a support jig 15, a tool load detector 16, and a control unit 20. In a state where each position of the pair of metal plates 5 is fixed, the friction stir welding device 1 performs the friction stir welding while moving the friction stirring tool 10 along the groove portion 6.

The friction stirring tool 10 has a first rotating tool 21 and a second rotating tool 22. The first rotating tool 21 is arranged across the groove portion 6 on one side (front surface side: upper side in Fig. 1) in the thickness direction. The first rotating tool 21 rotates around a first rotation axis I1, and is pressed against the front surface of the groove portion 6. The second rotating tool 22 is arranged across the groove portion 6 on the other side (rear surface side: lower side in Fig. 1) in the thickness direction. The second rotating tool 22 rotates around a second rotation axis I2, and is pressed against the rear surface of the groove portion 6. Then, the first rotating tool 21 and the second rotating tool 22 are arranged so as to face each other in the thickness direction. The rotation directions of the first rotating tool 21 and the second rotating tool 22 are opposite to each other. In addition, the first rotation axis I1 of the first rotating tool 21 and the second rotation axis I2 of the second rotating tool 22 are coaxial with each other. Therefore, the first rotation axis I1 and the second rotation axis I2 are orthogonal to the front surface and the rear surface of the groove portion 6.

According to first example, the rotation directions of the first rotating tool 21 and the second rotating tool 22 are opposite to each other, but are not limited to this configuration. As long as the rotation directions are suitable for the friction stir welding, the first rotating tool 21 and the second rotating tool 22 may employ any rotation direction, and may employ any rotation speed.

The first rotating tool 21 has a first tool main body 31, a first probe 32, and a protrusion 33. The first tool main body 31 has a first shoulder portion 35 formed on a front end side which is the second rotating tool 22 side. In the first shoulder portion 35, a surface on the front end side serves as a circular first shoulder surface 35a which comes into contact with the front surface on one side (front surface side: upper side in Fig. 1) of the groove portion 6. The first rotating tool 21 rotates in a state where the first shoulder surface 35a of the first shoulder portion 35 is brought into contact with the front surface of the groove portion 6, thereby transferring heat generated due to friction to the groove portion 6 and stirring the metal of the groove portion 6 softened by the transferred heat. The length of the first probe 32 is generally slightly shorter than half of the minimum plate thickness of the groove portion 6.

Here, the first shoulder portion 35 has a shape illustrated in Figs. 3 to 5. According to Embodiment 1, any shape may be employed. The first shoulder portion 35 has a groove-shaped recess 36 formed on the first tool main body 31 side from the first shoulder surface 35a. The recess 36 has a shape in which the metal softened due to the friction between the first shoulder portion 35 and the metal plate 5 faces the center side of the first shoulder portion 35.

Specifically, the recess 36 illustrated in Fig. 3 is configured to include a single body. The single recess 36 is arranged in a spiral shape (scroll shape) facing inward from the outer side on the first shoulder surface 35a. The recess 36 illustrated in Fig. 4 is configured to include two bodies. The two recesses 36 are disposed at positions whose phases are different from each other by 180° on the first shoulder surface 35a, and are arranged in a spiral shape facing inward from the outer side. The recess 36 illustrated in Fig. 5 is configured to include multiple bodies. The multiple recesses 36 are disposed at predetermined intervals in a circumferential direction of the first shoulder surface 35a, and are linearly arranged so as to face inward from the outer side.

Referring back to Fig. 1, the first probe 32 is disposed so as to protrude to the front end side from the first shoulder surface 35a of the first tool main body 31. The first probe 32 is arranged so as to sink into the softened groove portion 6, and is fixed to the first tool main body 31 so as to rotate integrally with the first tool main body 31. The first probe 32 has a large diameter on the rear end side, and is formed in a tapered shape whose diameter becomes thinner toward the front end side. A surface on the front end side of the first probe 32 is a circular front end surface 32a. In addition, an outer peripheral surface of the first probe 32 has a groove formed in order to stir the metal of the softened groove portion 6.

The protrusion 33 is disposed so as to protrude to the front end side from the front end surface 32a of the first probe 32. Similarly to the first probe 32, the protrusion 33 is arranged so as to sink into the softened groove portion 6, and is integrated with the first probe 32 so as to rotate integrally with the first tool main body 31 and the first probe 32. Here, the protrusion 33 has a polygonal cross section taken along a plane orthogonal to the first rotation axis I1. For example, as illustrated in Fig. 6, the protrusion 33 has a regular hexagonal cross section. According to first example, the protrusion 33 employs the regular hexagonal cross section, but may employ a regular triangular shape or a square shape.

In addition, as illustrated in Fig. 2, in the protrusion 33, a length in the protruding direction, that is, a length I in the axial direction of the first rotation axis I1 is 50% or smaller, compared to a combined length L in the axial direction of the first probe 32 and the protrusion 33. That is, the length I in the axial direction of the protrusion 33 is equal to or smaller than the length in the axial direction of the first probe 32.

Referring back to Fig. 1, the second rotating tool 22 has a second tool main body 41, a second probe 42, and a protrusion accommodating portion 43. The second tool main body 41 has a second shoulder portion 45 formed on the front end side which is the first rotating tool 21 side. The second shoulder portion 45 is configured similarly to the first shoulder portion 35, and a surface thereof on the front end side serves as a circular second shoulder surface 45a which comes into contact with the rear surface on the other side (rear surface side: lower side in Fig. 1) of the groove portion 6. The second rotating tool 22 rotates in a state where the second shoulder surface 45a of the second shoulder portion 45 is brought into contact with the rear surface of the groove portion 6, thereby transferring heat generated due to friction to the groove portion 6 and stirring the metal of the groove portion 6 softened by the transferred heat. The length of the second probe 42 is generally slightly shorter than half of the minimum plate thickness of the groove portion 6.

Here, the second shoulder portion 45 has the recess 36 similar to that of the first shoulder portion 35. The recess 36 is the same as that of the first shoulder portion 35, and thus description thereof will be omitted.

The second probe 42 is disposed so as to protrude to the front end side from the second shoulder surface 45a of the second tool main body 41. Similarly to the first probe 32, the second probe 42 is arranged so as to sink into the softened groove portion 6, and is fixed to the second tool main body 41 so as to rotate integrally with the second tool main body 41. The second probe 42 has a large diameter on the rear end side, and is formed in a tapered shape whose diameter becomes thinner toward the front end side. A surface on the front end side of the second probe 42 is a circular front end surface 42a (refer to Fig. 6). In addition, an outer peripheral surface of the second probe 42 has a groove formed in order to stir the metal of the softened groove portion 6.

The protrusion accommodating portion 43 is disposed so as to sink to the rear end side from the front end surface 42a of the second probe 42. For example, as illustrated in Fig. 6, the protrusion accommodating portion 43 has a circular cross section taken along a plane orthogonal to the second rotation axis I2, and is formed in a hollow cylindrical shape whose central axis is the second rotation axis I2. The protrusion 33 of the first rotating tool 21 is inserted in the axial direction of the second rotation axis I2, thereby enabling the protrusion accommodating portion 43 to partially accommodate the protrusion 33. That is, an inner diameter of the protrusion accommodating portion 43 is larger than a rotation diameter of the protrusion 33.

Here, as illustrated in Fig. 2, a rotation diameter r of the protrusion 33 falls within 40% to 80%, compared to an outer diameter (rotation diameter) R of the annular front end surface 42a of the second probe 42. In this manner, the length in a radial direction from the inner diameter to the outer diameter on the annular front end surface 42a can be set to the length of 10% to 30% of the diameter R. That is, for example, when the rotation diameter r of the protrusion 33 is 80%, compared to the rotation diameter R of the second probe 42, the length in the radial direction from the inner diameter to the outer diameter on the annular front end surface 42a is 10% of the rotation diameter R. In addition, for example, when the rotation diameter r of the protrusion 33 is 40%, compared to the rotation diameter R of the second probe 42, the length in the radial direction from the inner diameter to the outer diameter on the annular front end surface 42a is 30% of the rotation diameter R. Accordingly, the thickness between the outer peripheral surface of the second probe 42 and the inner peripheral surface of the protrusion accommodating portion 43 can be secured as the thickness which can withstand a load applied due to the contact with the protrusion 33.

In addition, as illustrated in Fig. 6, the protrusion 33 and the protrusion accommodating portion 43 are formed so that a predetermined gap is disposed between the protrusion 33 and the inner peripheral surface of the protrusion accommodating portion 43 for accommodating the protrusion 33. The predetermined gap is disposed therebetween, thereby bringing the protrusion 33 and the protrusion accommodating portion 43 into a non-contact state.

Incidentally, the protrusion 33 and the protrusion accommodating portion 43 are designed in accordance with the maximum presumed thickness of the groove portion 6. That is, if the thickness of the groove portion 6 is the maximum thickness, the first rotating tool 21 and the second rotating tool 22 are designed so as to be brought into a state where at least the front end portion of the protrusion 33 is accommodated in the protrusion accommodating portion 43 when the groove portion 6 is welded.

Referring back to Fig. 1, the first pressing and rotating mechanism 11 and the second pressing and rotating mechanism 12 will be described. The first pressing and rotating mechanism 11 is connected to the first rotating tool 21, and is controlled by the control unit 20. The first pressing and rotating mechanism 11 moves the first rotating tool 21 toward the groove portion 6, and rotates the first rotating tool 21. Therefore, the first pressing and rotating mechanism 11 rotates the first rotating tool 21 in a state where the first shoulder surface 35a of the first shoulder portion 35 of the first rotating tool 21 is pressed against the front surface of the groove portion 6.

The second pressing and rotating mechanism 12 is configured similarly to the first pressing and rotating mechanism 11, is connected to the second rotating tool 22, and is controlled by the control unit 20. The second pressing and rotating mechanism 12 moves the second rotating tool 22 toward the groove portion 6, and rotates the second rotating tool 22. Therefore, the second pressing and rotating mechanism 12 rotates the second rotating tool 22 in a state where the second shoulder surface 45a of the second shoulder portion 45 of the second rotating tool 22 is pressed against the rear surface of the groove portion 6.

The first movement mechanism 13 is connected to the first rotating tool 21, and is controlled by the control unit 20. The first movement mechanism 13 employs a first motor (not illustrated) as a power source, and moves the first rotating tool 21 along the groove portion 6 which linearly extends in a predetermined direction. The first motor is connected to the tool load detector 16 (to be described later).

The second movement mechanism 14 is configured similarly to the first movement mechanism 13, is connected to the second rotating tool 22, and is controlled by the control unit 20. The second movement mechanism 14 employs a second motor (not illustrated) as a power source, and moves the second rotating tool 22 along the groove portion 6 which linearly extends in the predetermined direction. The second motor is connected to the tool load detector 16 (to be described later).

The first movement mechanism 13 and the second movement mechanism 14 move the first rotating tool 21 and the second rotating tool 22 while the first rotating tool 21 and the second rotating tool 22 are synchronized with each other.

The support jigs 15 are a pair of jigs which respectively support the pair of metal plates 5, and are respectively disposed across the groove portion 6 on the rear surface of the pair of metal plates 5. The pair of metal plates 5 are placed on the upper portion of the pair of support jigs 15, thereby respectively supporting the pair of metal plates 5.

The tool load detector 16 has a first motor load detector 51 which detects a load applied to the first motor of the first movement mechanism 13, and a second motor load detector 52 which detects a load applied to the second motor of the second movement mechanism 14. The first motor load detector 51 is connected to the control unit 20, and outputs the load applied to the first motor toward the control unit 20. The second motor load detector 52 is connected to the control unit 20, and outputs the load applied to the second motor toward the control unit 20.

The control unit 20 is connected to the first pressing and rotating mechanism 11, the second pressing and rotating mechanism 12, the first movement mechanism 13, and the second movement mechanism 14 so as to control the respective mechanisms 11, 12, 13, and 14. In addition, the control unit 20 is connected to the first motor load detector 51 and the second motor load detector 52 so as to control the respective mechanisms 11, 12, 13, and 14, based on a detection result of the respective detectors 51 and 52.

Specifically, the control unit 20 controls the first pressing and rotating mechanism 11 and the second pressing and rotating mechanism 12, and moves the first rotating tool 21 and the second rotating tool 22 toward the groove portion 6 so that a load applied to the groove portion 6 interposed between the first rotating tool 21 and the second rotating tool 22 becomes a predetermined load. In addition, the control unit 20 controls the first pressing and rotating mechanism 11 and the second pressing and rotating mechanism 12, and rotates the first rotating tool 21 and the second rotating tool 22 so that the rotation directions of the first rotating tool 21 and the second rotating tool 22 become opposite to each other, and additionally so that the first rotating tool 21 and the second rotating tool 22 are rotated at a predetermined rotation speed.

In addition, the control unit 20 controls the first movement mechanism 13 and the second movement mechanism 14, and controls the first rotating tool 21 and the second rotating tool 22 so as to be moved along the groove portion 6 in synchronization with each other. Here, when the first rotating tool 21 and the second rotating tool 22 are moved while being in synchronization with each other, relative positions of the first rotating tool 21 and the second rotating tool 22 are misaligned with each other in a predetermined direction in which the groove portion 6 extends, thereby causing a possibility that a great load may be applied thereto as in a case where the first rotating tool 21 and the second rotating tool 22 come into contact with each other. In this case, based on a detection result of the first motor load detector 51 and the second motor load detector 52, the control unit 20 controls the first movement mechanism 13 and the second movement mechanism 14 so as to adjust the relative positions of the first rotating tool 21 and the second rotating tool 22. Specifically, the control unit 20 derives a difference between a load of the first motor which is detected by the first motor load detector 51 and a load of the second motor which is detected by the second motor load detector 52. If based on the derived difference, the control unit 20 determines that the load of the first movement mechanism 13 is greater than the load of the second movement mechanism 14, the control unit 20 determines that the first rotating tool 21 pulls the second rotating tool 22 while the protrusion 33 and the protrusion accommodating portion 43 come into contact with each other. Then, the control unit 20 controls at least one of the first movement mechanism 13 and the second movement mechanism 14, relatively slows down the movement speed of the first rotating tool 21 by a predetermined time, compared to the movement speed of the second rotating tool 22, and brings the protrusion 33 and the protrusion accommodating portion 43 into a non-contact state. On the other hand, if based on the derived difference, the control unit 20 determines that the load of the second movement mechanism 14 is greater than the load of the first movement mechanism 13, the control unit 20 determines that the second rotating tool 22 pulls the first rotating tool 21 while the protrusion 33 and the protrusion accommodating portion 43 come into contact with each other. Then, the control unit 20 controls at least one of the first movement mechanism 13 and the second movement mechanism 14, relatively slows down the movement speed of the second rotating tool 22 by a predetermined time, compared to the movement speed of the first rotating tool 21, and brings the protrusion 33 and the protrusion accommodating portion 43 into a non-contact state.

Next, referring to Fig. 8, a friction stir welding method using the above-described friction stir welding device 1 will be described. The pair of metal plates 5 on which friction stir welding is performed are previously in a state illustrated in Fig. 7. That is, in a state where end surfaces thereof are caused to butt against each other so as to form the groove portion 6, the pair of metal plates 5 are in a state of being temporarily welded (tacked) by the pair of tab plates 7. In this case, the through-hole 8 is formed in a welding starting point on one tab plate 7. The through-hole 8 has an inner diameter so that a gap between (the first probe 32 of) the first rotating tool 21 on one side (front surface side of the groove portion 6) and the through-hole 8 is different from a gap between (the second probe 42 of) the second rotating tool 22 on the other side (rear surface side of the groove portion 6) and the through-hole 8. That is, when the respective probes 32 and 42 have the same shape, the inner diameter on one side of the through-hole 8 is smaller than the inner diameter on the other side of the through-hole 8, or the inner diameter on the other side of the through-hole 8 is smaller than the inner diameter on one side of the through-hole 8.

When the friction stir welding is performed, the control unit 20 first controls the first pressing and rotating mechanism 11 and the second pressing and rotating mechanism 12 so as to insert the first rotating tool 21 into the through-hole 8 previously formed to penetrate the welding starting point from the front surface side of the through-hole 8, and so as to insert the second rotating tool 22 into the through-hole 8 from the rear surface side of the through-hole 8. In this case, the control unit 20 allows the protrusion 33 of the first rotating tool 21 to be accommodated in the protrusion accommodating portion 43 of the second rotating tool 22. At this time point, a gap is present between the friction stirring tool 10 and (the through-hole 8 formed in) the metal plate 5. Then, the control unit 20 controls the first pressing and rotating mechanism 11 and the second pressing and rotating mechanism 12 so as to rotate the first rotating tool 21 and the second rotating tool 22 (Step S1: rotating step).

Subsequently, the control unit 20 controls the first pressing and rotating mechanism 11 and the second pressing and rotating mechanism 12 so as to relatively adjust each insertion position for the first rotating tool 21 and the second rotating tool 22 (Step S2: position adjusting step). Specifically, while controlling the positions of the first rotating tool 21 and the second rotating tool 22, the control unit 20 controls the first pressing and rotating mechanism 11 and the second pressing and rotating mechanism 12 so that a load applied to the groove portion 6 becomes a predetermined load.

Thereafter, the control unit 20 controls the first movement mechanism 13 and the second movement mechanism 14 so as to move the first rotating tool 21 and the second rotating tool 22 from the welding starting point on one tab plate 7 to the welding end point on the other tab plate 7 through the groove portion 6 (Step S3: moving step). In this manner, the friction stir welding is performed on the groove portion 6 of the pair of metal plates 5 by the first rotating tool 21 and the second rotating tool 22. During this moving step S3, the control unit 20 controls the first movement mechanism 13 and the second movement mechanism 14 so as to adjust the movement speed of the first rotating tool 21 and the second rotating tool 22. In this manner, the relative positions are adjusted so as to bring the first rotating tool 21 and the second rotating tool 22 into a non-contact state.

Then, if the first rotating tool 21 and the second rotating tool 22 reach the welding end point, the control unit 20 controls the first pressing and rotating mechanism 11 and the second pressing and rotating mechanism 12. While rotating the first rotating tool 21 and the second rotating tool 22, the control unit 20 extracts the first rotating tool 21 and the second rotating tool 22 from the other tab plate 7 (Step S4: extracting step).

As described above, according to the configuration in Embodiment 1, the protrusion 33 of the first rotating tool 21 is accommodated in the protrusion accommodating portion 43 of the second rotating tool 22, and the first rotating tool 21 and the second rotating tool 22 are rotated. While heat is transferred into both the front surface and the rear surface of the groove portion 6 of the pair of metal plates 5, the friction stir welding can be performed on the groove portion 6. Therefore, even if the groove portion 6 becomes thick, an accommodation depth (insertion depth) for accommodating the protrusion 33 in the protrusion accommodating portion 43 is properly changed. Accordingly, friction stirring can be performed over the thickness of the groove portion 6 by arranging the first probe 32, the second probe 42, and the protrusion 33. In this manner, a predetermined gap is not formed between the first probe 32 and the second probe 42. Therefore, it is possible to limit the occurrence of a defectively welded portion in the groove portion 6. In addition, even if the groove portion 6 becomes thick, the accommodation depth for accommodating the protrusion 33 in the protrusion accommodating portion 43 may be changed. Accordingly, it is not necessary to change the length of the first probe 32 and the second probe 42 in the axial direction (protruding direction) of the first probe 32 and the second probe 42. Therefore, it is possible to limit an increase in a load applied to the friction stirring tool 10. In addition, the length in the axial direction (protruding direction) of the first probe 32 and the second probe 42 can be shortened to approximately half of the probe disclosed in PTL 2. The load applied to the respective probes 32 and 42 can be considerably reduced. According to the above-described configuration, even if the thickness of the groove portion 6 varies, friction stir welding can be suitably performed on the groove portion 6, while the load applied to the friction stirring tool 10 is limited.

In addition, according to the configuration in first example, the length of the protrusion 33 can be shortened further than the length of the first probe 32. Accordingly, it is possible to decrease a bending moment applied to the protrusion 33. Therefore, it is possible to limit a load applied to the protrusion 33.

In addition, according to the configuration in first example, the length in the radial direction from the inner side diameter to the outer side diameter on the annular front end surface 42a of the second probe 42 can be set to the length of 10% to 30% of the diameter R. Accordingly, the thickness between the outer peripheral surface of the second probe 42 and the inner peripheral surface of the protrusion accommodating portion 43 can have the rigidity which can withstand a load applied due to the contact with the protrusion 33.

In addition, according to the configuration in first example, the protrusion 33 and the inner peripheral surface of the protrusion accommodating portion 43 can be brought into a non-contact state. Accordingly, it is possible to decrease a load applied to the first rotating tool 21 and the second rotating tool 22 due to the contact.

In addition, according to the configuration in first example, the protrusion accommodating portion 43 can have a circular cross section. Accordingly, even if the protrusion accommodating portion 43 is rotated, a shape of the protrusion accommodating portion 43 is not changed. Therefore, the protrusion accommodating portion 43 can flexibly correspond to a shape of the protrusion 33. In this manner, even if there is a rotation difference between the first rotating tool 21 and the second rotating tool 22, it is possible to adopt a configuration in which the protrusion accommodating portion 43 is less likely to come into contact with the protrusion 33.

In addition, according to the configuration in first example, the protrusion 33 can have a polygonal cross section. Accordingly, the metal of the groove portion 6 softened due to friction can be suitably stirred by the protrusion 33.

In addition, according to the configuration in first example, even if the groove portion 6 has the maximum presumed thickness, the first rotating tool 21 and the second rotating tool 22 can be rotated in a state where the protrusion 33 is accommodated in the protrusion accommodating portion 43.

In addition, according to the configuration in first example, the first rotation axis I1 can be orthogonal to the front surface of the groove portion 6, and the second rotation axis I2 can be orthogonal to the rear surface of the groove portion 6. Therefore, the first shoulder surface 35a of the first shoulder portion 35 and the second shoulder surface 45a of the second shoulder portion 45 can be brought into surface contact with both the front surface and the rear surface of the groove portion 6. Accordingly, heat can be efficiently transferred to the groove portion 6 from the first shoulder portion 35 and the second shoulder portion 45. In particular, the recess 36 is disposed in the first shoulder portion 35 and the second shoulder portion 45. Therefore, a material is supplied to the groove portion 6, thereby enabling welding in which defects are less likely to occur.

In addition, according to the configuration in first example, the movements of the first rotating tool 21 and the second rotating tool 22 can be synchronized with each other. Therefore, it is possible to prevent the first rotating tool 21 and the second rotating tool 22 from being misaligned with each other due to the movements.

In addition, according to the configuration in first example, when a load is applied to the friction stirring tool 10, based on a detection result of the first motor load detector 51 and the second motor load detector 52, the control unit 20 controls at least one of the first movement mechanism 13 and the second movement mechanism 14 so as to decrease a difference between loads applied to the first motor of the first movement mechanism 13 and the second motor of the second movement mechanism 14. In this manner, it is possible to limit a load applied to the friction stirring tool 10.

In addition, according to the configuration in first example, not only in the position adjusting step S2 but also in the moving step S3, the relative position between the first rotating tool 21 and the second rotating tool 22 can be adjusted. Accordingly, it is possible to prevent the first rotating tool 21 and the second rotating tool 22 from coming into contact with each other. Therefore, it is possible to limit a load applied to the friction striring tool 10.

In addition, according to the configuration in first example, the inner diameter on one side or the inner diameter on the other side of the through-hole 8 can be decreased. Accordingly, it is possible to improve a filling ratio of the through-hole 8 filled with the metal material. Therefore, it is possible to prevent a dent in the metal around the through-hole 8 which is softened due to friction.

In addition, according to the configuration in first example, the through-hole 8 formed at the welding starting point and the hole formed by extracting the first rotating tool 21 and the second rotating tool 22 at the welding end point can be formed on the tab plate 7 without being formed on the pair of metal plates 5.

According first example, the recess 36 is disposed in the first shoulder portion 35. However, a configuration may be adopted by omitting the recess 36.

In addition, according to first example, the protrusion 33 has the polygonal cross section, but may have a circular cross section. In this case, the gap between the protrusion 33 and the protrusion accommodating portion 43 can be further shortened.

In addition, according to first example, as the tool load detector 16, the first motor load detector 51 and the second motor load detector 52 are used in order to detect a load applied to the friction stirring tool 10. However, the tool load detector 16 is not limited to this configuration. As the tool load detector 16, a strain gauge (strain detector) for detecting a strain of at least one of the first rotation axis I1 of the first rotating tool 21 and the second rotation axis I2 of the second rotating tool 22 may be used in order to detect a load applied to the friction stirring tool 10. According to this configuration, based on a detection result of the strain gauge, the control unit 20 controls at least one of the first movement mechanism 13 and the second movement mechanism 14 so as to decrease the strain of at least one of the first rotation axis I1 and the second rotation axis I2. In this manner, the protrusion 33 and the inner peripheral surface of the protrusion accommodating portion 43 can be brought into a non-contact state. Therefore, it is possible to limit a load applied to the friction stirring tool 10.

Similarly, as the tool load detector 16, an operation sound detector for detecting an operation sound of the friction stirring tool 10 may be used in order to detect a load applied to the friction stirring tool 10. According to this configuration, based on a detection result of the operation sound detector, the control unit 20 controls at least one of the first movement mechanism 13 and the second movement mechanism 14 so as to decrease the operation sound of the friction stirring tool 10. In this manner, the protrusion 33 and the inner peripheral surface of the protrusion accommodating portion 43 can be brought into a non-contact state. Therefore, it is possible to limit a load applied to the friction stirring tool 10.

Similarly, as the tool load detector 16, a vibration detector for detecting vibrations of at least one of the first rotating tool 21 and the second rotating tool 22 may be used in order to detect a load applied to the friction stirring tool 10. According to this configuration, the control unit 20 determines whether or not a vibration mode detected by the vibration detector is a load vibration mode when a load is applied to at least one of the first rotating tool 21 and the second rotating tool 22. In a case of the load vibration mode, the control unit 20 controls at least one of the first movement mechanism 13 and the second movement mechanism 14 so that the vibration mode is switched to a vibration mode other than the load vibration mode. In this manner, the protrusion 33 and the inner peripheral surface of the protrusion accommodating portion 43 can be brought into a non-contact state. Therefore, it is possible to limit a load applied to the friction stirring tool 10.

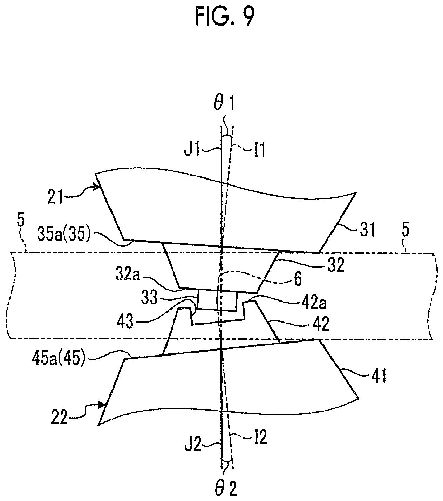

In addition, according to first example, the first rotation axis I1 and the second rotation axis I2 are coaxial with each other. However, a modification example illustrated in Fig. 9 may be adopted. Fig. 9 is a schematic configuration view schematically illustrating a portion of a friction stir welding device according to the modification example of Embodiment 1. As illustrated in Fig. 9, the first rotating tool 21 and the second rotating tool 22 according to the modification example are arranged so as to tilt to the front surface and the rear surface of the groove portion 6. Specifically, the first rotation axis I1 of the first rotating tool 21 is arranged so as to tilt to a first orthogonal axis J1 orthogonal to the front surface of the groove portion 6 by a predetermined angle θ1. Similarly, the second rotation axis I2 of the second rotating tool 22 is arranged so as to tilt to a second orthogonal axis J2 orthogonal to the rear surface of the groove portion 6 by a predetermined angle θ2. Here, the angle θ1 and the angle θ2 are set to be larger than 0° and equal to or smaller than 3°. When the angle θ1 and the angle θ2 are set to 0°, as described in first example, the first rotation axis I1 and the second rotation axis I2 are coaxial with each other.

As described above, according to the configuration in the modification example, the first rotation axis I1 of the first rotating tool 21 and the second rotation axis I2 of the second rotating tool 22 can tilt to both the front surface and the rear surface of the groove portion 6. Accordingly, the respective shoulder surfaces 35a and 45a of the respective shoulder portions 35 and 45 in a tilted shape come into contact with both the front surface and the rear surface of the groove portion 6. Therefore, the groove portion 6 can be actively stirred.

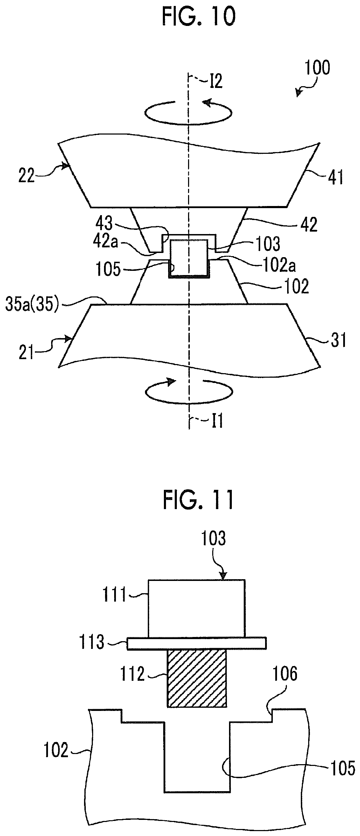

Next, referring to Figs. 10 and 11, a friction stir welding device 100 according to the present invention will be described. Fig. 10 is a schematic configuration view schematically illustrating a portion of the friction stir welding device according to the present invention. Fig. 11 is a partially enlarged explanatory view of the friction stirring tool according to the present invention. In order to avoid repeated description in the present invention, configurations different from those in first example will be described, and the same reference numerals will be given to configurations similar to those in first example. The friction stir welding device 1 according to the present invention adopts a configuration in which the protrusion 33 of the friction stir welding device 100 according to first example is attachable and detachable. Hereinafter, the friction stir welding device 100 according to the present invention will be described.

As illustrated in Fig. 10, in the friction stir welding device 100 according to the present invention, position of the first rotating tool 21 and the second rotating tool 22 in the friction stirring tool 10 is opposite to the position in the arrangement according to first example. The first rotating tool 21 has the first tool main body 31, a first probe 102, and a protrusion 103. The first tool main body 31 is similar to that according to first example, and thus description thereof will be omitted.

The first probe 102 is disposed so as to protrude to the front end side from the first shoulder surface 35a of the first tool main body 31, and is formed in a tapered shape whose diameter becomes thinner toward the front end side. The first probe 102 has a fixing hole 105 which sinks to a rear end side from a front end surface 102a. Therefore, the front end surface 102a of the first probe 102 is an annular surface.

As illustrated in Figs. 10 and 11, the fixing hole 105 is a hole for fixing the protrusion 103. The fixing hole 105 has a circular cross section taken along a plane orthogonal to the first rotation axis I1, and is formed in a hollow cylindrical shape whose central axis is the first rotation axis I1. In addition, the fixing hole 105 is a screw hole whose inner peripheral surface has a screw groove of a female screw. Therefore, the protrusion 103 having a screw groove of a male screw (to be described later) is fastened to the fixing hole. An edge portion on the front end side of the fixing hole 105 has a flange accommodating portion 106 which has a larger diameter than the fixing hole 105. The flange accommodating portion 106 is formed in a hollow disc shape, and accommodates a flange portion 113 disposed in the protrusion 103.

The protrusion 103 has a protrusion main body 111 on the front end side, a screw portion 112 on the rear end side, and the flange portion 113 disposed between the protrusion main body 111 and the screw portion 112. The protrusion main body 111 is a portion protruding (exposed) from the fixing hole 105. Similarly to first example, the protrusion main body 111 has a polygonal cross section taken along a plane orthogonal to the first rotation axis I1. The screw portion 112 is a portion accommodated inside the fixing hole 105, has a circular cross section taken along a plane orthogonal to the first rotation axis I1, and the outer peripheral surface has a screw groove of a male screw. The flange portion 113 has a larger diameter than the protrusion main body 111 and the screw portion 112. The flange portion 113 protrudes outward in the radial direction of the screw portion 112, and is formed in an annular shape along the circumferential direction.

If the above-described protrusion 103 is fastened to the fixing hole 105, the screw portion 112 is accommodated in the fixing hole 105, and the flange portion 113 is accommodated in the flange accommodating portion 106. In this case, the flange portion 113 comes into contact with a bottom surface of the flange accommodating portion 106 in the axial direction of the first rotation axis I1. Therefore, the flange portion 113 can prevent the metal of the softened groove portion 6 from entering a gap formed between the fixing hole 105 and the screw portion 112.

In addition, the protrusion 103 is configured to include a material whose rigidity is lower than that of the second probe 42. Therefore, the rigidity of the front end portion of the second probe 42 having the protrusion accommodating portion 43 is higher than the rigidity of the protrusion 103 accommodated in the protrusion accommodating portion 43. Accordingly, even when the protrusion accommodating portion 43 and the protrusion 103 come into contact with each other, a load applied to the protrusion accommodating portion 43 is reduced.

In the protrusion 103 configured in this way, in accordance with the thickness of the groove portion 6, multiple types of the protrusion main body 111 which have different lengths in the axial direction of the first rotation axis I1 are prepared. That is, when the groove portion 6 is thick, the protrusion 103 having the long protrusion main body 111 is used. When the groove portion 6 is thin, the protrusion 103 having the short protrusion main body 111 is used.

As described above, according to the configuration in the present invention, the protrusion 103 can be detachably fixed to the first probe 102, thereby enabling the protrusion 103 to be replaced. Therefore, if the protrusion 103 is damaged, the protrusion 103 can be replaced with a new protrusion 103. In addition, in accordance with the thickness of the groove portion 6, the protrusion 103 having the suitable length can be selected and mounted on the first probe 102.

In addition, according to the configuration in the present invention, the flange portion 113 can be disposed in the protrusion 103. Accordingly, in a state where the protrusion 103 is fixed to the fixing hole 105, the flange portion 113 can prevent the metal of the groove portion 6 softened due to friction from entering a gap between the fixing hole 105 and the screw portion 112. In this manner, it is possible to prevent the fixing hole 105 and the protrusion 103 from being fixedly attached to each other.

In addition, according to the configuration in the present invention, the protrusion 103 can be configured to include the material whose rigidity is lower than that of the second probe 42. Accordingly, even when the protrusion 103 comes into contact with the protrusion accommodating portion 43 of the second probe 42, the replaceable protrusion 103 can absorb an impact made by the contact with the second probe 42.

In addition, according to the configuration in the present invention, the protrusion 103 suitable for the thickness of the groove portion 6 can be selected and attached to the fixing hole 105 of the first probe 102. Therefore, the friction stir welding can be suitably performed by using the protrusion 103 suitable for the thickness of the groove portion 6.

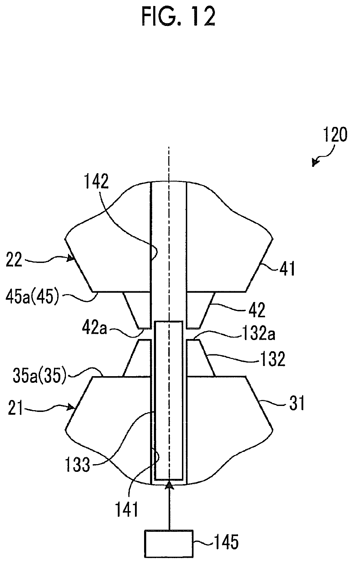

Next, referring to Fig. 12, a friction stir welding device 120 according to a second example not being part of the present invention will be described. Fig. 12 is a schematic configuration view schematically illustrating a portion of the friction stir welding device according to a second example. In order to also avoid repeated description in a second example, configurations different from those in the first example and the present invention will be described, and the same reference numerals will be given to configurations similar to those in the first example and in the present invention. The friction stir welding device 120 according to second example adopts a configuration including a protrusion pin which is movable inside the first rotating tool 21. Hereinafter, the friction stir welding device 120 according to second example will be described.

As illustrated in Fig. 12, in the friction stir welding device 120 according to second example, each position of the first rotating tool 21 and the second rotating tool 22 of the friction stirring tool 10 is opposite to the position in the arrangement according to first example. The first rotating tool 21 has the first tool main body 31, a first probe 132, and a protrusion pin 133. The first tool main body 31 is similar to that according to first example, and thus description thereof will be omitted.

The first probe 132 is disposed so as to protrude to the front end side from the first shoulder surface 35a of the first tool main body 31, and is formed in a tapered shape whose diameter becomes thinner toward the front end side. The first probe 132 has a first insertion hole 141 which is formed to penetrate from a front end surface 132a thereof to a rear end side. Therefore, the front end surface 132a of the first probe 132 is an annular surface.

The first insertion hole 141 is a hole into which the protrusion pin 133 is inserted. The first insertion hole 141 is formed to penetrate from the first probe 132 throughout the first tool main body 31. The first insertion hole 141 has a circular cross section taken along a plane orthogonal to the first rotation axis I1, and is formed in a hollow cylindrical shape whose central axis is the first rotation axis I1.

The protrusion pin 133 is rotatably inserted into the first insertion hole 141 of the first rotating tool 21, and is movable in the axial direction of the first rotation axis I1. The protrusion pin 133 is formed in a cylindrical shape which has a circular cross section. The protrusion pin 133 functions as the protrusion by a portion on the front end side protruding from the first insertion hole 141. The protrusion pin 133 is formed in the cylindrical shape. However, for example, the front end portion may have a polygonal cross section, and the rear end portion may have a circular cross section. Alternatively, a shape of the front end portion may be different from a shape of the rear end portion. In addition, the protrusion pin 133 is rotatable independently from the first tool main body 31 and the first probe 132.

Here, a gap between the protrusion pin 133 and the first insertion hole 141 has a narrow front end side of the protrusion pin 133, and has a wide rear end side of the protrusion pin 133. Therefore, the front end side of the protrusion pin 133 is accurately aligned with the first insertion hole 141 inside a plane orthogonal to the first rotation axis I1. On the other hand, the rear end side of the protrusion pin 133 is allowed to move inside the plane orthogonal to the first rotation axis I1.

An axial movement and rotating mechanism 145 which moves the protrusion pin 133 in the axial direction inside the first insertion hole 141 and which rotates the protrusion pin 133 is connected to the protrusion pin 133. The axial movement and rotating mechanism 145 is connected to the control unit 20. The axial movement and rotating mechanism 145 is controlled by the control unit 20 so as to control the axial movement and rotation of the protrusion pin 133.

The second rotating tool 22 has the second tool main body 41, the second probe 42, and a second insertion hole 142 serving as the protrusion accommodating portion. The second tool main body 41 and the second probe 42 are similar to those according to first example, and thus description thereof will be omitted.

The second insertion hole 142 is formed to penetrate from a front end surface 42a to the rear end side of the second probe 42. The second insertion hole 142 is a hole for accommodating the front end portion of the protrusion pin 133. The second insertion hole 142 is formed to penetrate from the second probe 42 throughout the second tool main body 41. The second insertion hole 142 has a circular cross section taken along a plane orthogonal to the second rotation axis I2, and is formed in a hollow cylindrical shape whose central axis is the second rotation axis I2. In this case, the protrusion pin 133 is inserted into the first insertion hole 141 and the second insertion hole 142 so that the first rotation axis I1 and the second rotation axis I2 become coaxial with each other. Therefore, according to second example, friction stir welding is performed without tilting the first rotation axis I1 and the second rotation axis I2 to both the front surface and the rear surface of the groove portion 6.

When the friction stir welding is performed by using the friction stir welding device 120 configured as described above, in the rotating step S1, the first rotating tool 21 and the second rotating tool 22 are inserted from the front and rear surfaces of the through-hole 8. Thereafter, the protrusion pin 133 accommodated in the first insertion hole 141 is moved to the front end side by the axial movement and rotating mechanism 145, and is inserted into the second insertion hole 142. At this time point, a gap is present between the friction stirring tool 10 and (the through-hole 8 formed in) the metal plate 5. Thereafter, the first rotating tool 21, the second rotating tool 22, and the protrusion pin 133 are rotated. In this case, the rotation of the protrusion pin 133 may be properly changed in accordance with a gap between the front end of the first probe 132 and the front end of the second probe 42. That is, if the gap is wide, the rotation speed of the protrusion pin 133 may be increased. In contrast, if the gap is narrow, the rotation speed of the protrusion pin 133 may be decreased.

As described above, according to the configuration in second example, the front end portion of the protrusion pin 133 can be accommodated in the second insertion hole 142 by moving the protrusion pin 133 inside the first insertion hole 141. Therefore, if the thickness of the groove portion 6 varies, it is possible to easily arrange the protrusion so as to have the length suitable for the length of the groove portion 6 by changing a protrusion amount of the protrusion pin 133 protruding from the first insertion hole 141.

In addition, according to the configuration in second example, the protrusion pin 133 can be inserted into the second insertion hole 142. Accordingly, the depth of the protrusion pin 133 inserted into the second insertion hole 142 can be set to a suitable depth. For example, the protrusion pin 133 is deeply inserted into the second insertion hole 142. In this manner, the first rotation axis I1 of the first rotating tool 21 and the second rotation axis I2 of the second rotating tool 22 can be accurately aligned with each other. On the other hand, the protrusion pin 133 is shallowly inserted into the second insertion hole 142. In this manner, even if the protrusion pin 133 is slightly tilted, the protrusion pin 133 is allowed to tilt inside the second insertion hole 142. Therefore, it is possible to limit a load applied to the protrusion pin 133.

In addition, according to the configuration in second example, on the front end side of the protrusion pin 133, the gap with the first insertion hole 141 is narrow. Accordingly, alignment on the front end side of the protrusion pin 133 can be accurately performed. On the other hand, on the rear end side of the protrusion pin 133, the gap with the first insertion hole 141 is wide. Accordingly, the protrusion pin 133 is allowed to be deformed due to eccentricity. Therefore, it is possible to limit a load applied to the protrusion pin 133.

According to second example, the protrusion pin 133 inserted into the first insertion hole 141 is rotatable inside the first insertion hole 141. However, the embodiment is not limited thereto. Whereas the protrusion pin 133 and the first insertion hole 141 may be joined to each other by a spline so as to allow the protrusion pin 133 to move in the axial direction, the protrusion pin 133 may be unmovable in the rotation direction. According to this configuration, the rotation of the protrusion pin 133 can be synchronized with the rotation of the first rotating tool 21.

In addition, the configuration in second example may further include a pin load detector for detecting a load applied to the protrusion pin 133. The control unit 20 may control the axial movement and rotating mechanism 145 so as to decrease a load applied when the protrusion pin 133 enters and exits from the second insert-hole 142. That is, when the load detected by the pin load detector is great, the control unit 20 controls at least one of the first movement mechanism 13 and the second movement mechanism 14, and moves the relative positions of the upper and lower rotating tools 21 and 22 so as to decrease the load applied to the protrusion pin 133.

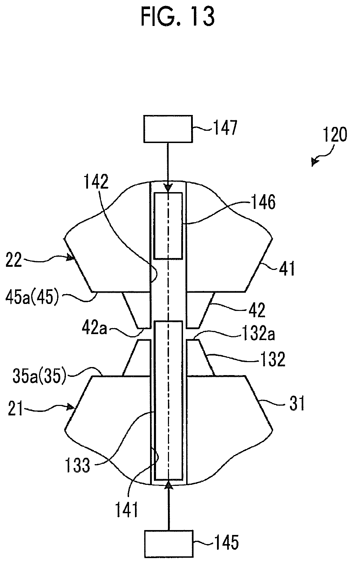

In addition, the friction stir welding device 120 according to second example may adopt a modification example illustrated in Fig. 13. Fig. 13 is a schematic configuration view schematically illustrating a portion of a friction stir welding device according to the modification example of Embodiment 3. As illustrated in Fig. 13, the second rotating tool 22 further has an ejector pin 146 which is movable inside the second insertion hole 142. After the friction stir welding is performed, the ejector pin 146 is used in order to extract the metal of the softened groove portion 6 which enters the inside of the second insertion hole 142.

The ejector pin 146 is movable inside the second insertion hole 142 in the axial direction of the second rotation axis I2. The ejector pin 146 is formed in a cylindrical shape which has a circular cross section. A front end side portion of the ejector pin 146 protrudes from the second insertion hole 142. An axial movement mechanism 147 which moves the ejector pin 146 inside the second insertion hole 142 in the axial direction is connected to the ejector pin 146. The axial movement mechanism 147 is connected to the control unit 20, and the axial movement mechanism 147 is controlled by the control unit 20, thereby controlling the movement of the ejector pin 146 in the axial direction.

As described above, according to the configuration in the modification example, after the friction stir welding is performed, even if the metal of the groove portion 6 softened due to friction enters the second insertion hole 142, when the welding is completed, the ejector pin 146 can extract the softened metal and can discharge the metal outward from the second insertion hole 142. Therefore, the metal softened when the temperature of the friction stirring tool 10 is lowered can be prevented from being fixedly attached thereto inside the second insertion hole 142 after the welding is completed.

In addition, the friction stir welding devices 100 and 120 according to the present invention and the second example may further include a thickness measuring instrument for measuring the thickness of the groove portion 6 before welding or during welding. Based on a measurement result detected by the thickness measuring instrument, the control unit 20 may select the length of the protrusion 103 or the protrusion amount of the protrusion pin 133. According to this configuration, it is possible to use the protrusion 103 suitable for the thickness of the groove portion 6, or it is possible to employ the protrusion amount of the protrusion pin 133 which is suitable for the thickness of the groove portion 6. In particular, second example includes a function which enables the device to measure the thickness of the groove portion 6 during the welding. Therefore, it is possible to reduce a load applied to the friction stirring tool 10 by controlling the protrusion amount of the protrusion pin 133.

### Reference Signs List

- 1: FRICTION STIR WELDING DEVICE
- 5: METAL PLATE
- 6: GROOVE PORTION
- 7: TAB PLATE
- 8: THROUGH-HOLE
- 10: FRICTION STIRRING TOOL
- 11: FIRST PRESSING AND ROTATING MECHANISM
- 12: SECOND PRESSING AND ROTATING MECHANISM
- 13: FIRST MOVEMENT MECHANISM
- 14: SECOND MOVEMENT MECHANISM
- 15: SUPPORT JIG
- 16: TOOL LOAD DETECTOR
- 20: CONTROL UNIT
- 21: FIRST ROTATING TOOL
- 22: SECOND ROTATING TOOL
- 31: FIRST TOOL MAIN BODY
- 32: FIRST PROBE
- 33: PROTRUSION
- 35: FIRST SHOULDER PORTION
- 41: SECOND TOOL MAIN BODY
- 42: SECOND PROBE
- 43: PROTRUSION ACCOMMODATING PORTION
- 45: SECOND SHOULDER PORTION
- 51: FIRST MOTOR LOAD DETECTOR
- 52: SECOND MOTOR LOAD DETECTOR
- 100: FRICTION STIR WELDING DEVICE (EMBODIMENT 2)
- 102: FIRST PROBE (EMBODIMENT 2)
- 103: PROTRUSION (EMBODIMENT 2)
- 105: FIXING HOLE 106 FLANGE ACCOMMODATING PORTION
- 111: PROTRUSION MAIN BODY
- 112: SCREW PORTION
- 113: FLANGE PORTION
- 120: FRICTION STIR WELDING DEVICE (EMBODIMENT 3)
- 132: FIRST PROBE (EMBODIMENT 3)
- 133: PROTRUSION PIN
- 141: FIRST INSERTION HOLE
- 142: SECOND INSERTION HOLE
- 145: AXIAL MOVEMENT AND ROTATING MECHANISM
- 146: EJECTOR PIN
- 147: AXIAL MOVEMENT MECHANISM
- I1: FIRST ROTATION AXIS
- I2: SECOND ROTATION AXIS

## Claims

1. A friction stirring tool (10) comprising:
a first rotating tool (21) that is arranged for a welding-target portion (6) of a metal material (5), on one side across the welding-target portion (6); and
a second rotating tool (22) that is arranged on the other side across the welding-target portion (6), and that is disposed so as to face the first rotating tool (21),
wherein the first rotating tool (21) has
a first tool main body (31) having a first shoulder portion (35) which comes into contact with one side surface of the welding-target portion (6),
a first probe (32) protruding toward the second rotating tool (22) from the first tool main body (31), and
a protrusion (33) protruding toward the second rotating tool (22) from the first probe (32), and
wherein the second rotating tool(22) has
a second tool main body (41) having a second shoulder portion (45) which comes into contact with the other side surface of the welding-target portion (6),
a second probe (42) protruding toward the first rotating tool (21) from the second tool main body(41), and
a protrusion accommodating portion (43) disposed in the second probe (42) and capable of accommodating the protrusion (33) of the first rotating tool (21), **characterized in that**
the protrusion (103) is detachably fixed to the first probe (102),
the first probe (102) further has a fixing hole (105) for fixing the protrusion (103), and
the protrusion (103) has a flange portion (113) which protrudes outward from the fixing hole (105) and which comes into contact with the first probe (102).

2. The friction stirring tool (10) according to Claim 1,
wherein a length (I) of the protrusion (33) in a protruding direction is equal to or smaller than 50%, compared to a combined length (I) of the first probe (32) and the protrusion (33) in the protruding direction.

3. The friction stirring tool (10) according to Claim 1 or 2,
wherein a rotation diameter (r) of the protrusion (33) is a diameter of 40% to 80%, compared to a rotation diameter (R) on the first rotating tool side of the second probe (42).

4. The friction stirring tool (10) according to any one of Claims 1 to 3,
wherein a predetermined gap brought into a non-contact state is disposed between the protrusion (33) and an inner surface of the protrusion accommodating portion (43) in which the protrusion (33) is accommodated.

5. The friction stirring tool (10) according to any one of Claims 1 to 4,
wherein the protrusion accommodating portion (43) has a circular cross section which is taken along a plane orthogonal to a rotation axis of the second rotating tool (22) .

6. The friction stirring tool (10) according to any one of Claims 1 to 5,
wherein the protrusion (33) has a polygonal cross section which is taken along a plane orthogonal to a rotation axis of the first rotating tool (21).

7. The friction stirring tool (10) according to any one of Claims 1 to 6,
wherein the protrusion (103) is configured to include a material whose rigidity is lower than that of the second probe (42).

8. The friction stirring tool (10) according to any one of Claims 1 to 7,
wherein multiple types of the protrusion (103) are prepared so as to have different lengths in the protruding direction in accordance with the thickness of the welding-target portion (6).

9. A friction stir welding device (1, 100, 120) comprising:
the friction stirring tool (10) according to any one of Claims 1 to 8;
a first pressing and rotating mechanism (11) that rotates the first rotating tool (21) in a state where the first shoulder portion (35) of the first rotating tool (21) of the friction stirring tool (10) is pressed against one side surface of the welding-target portion (6);
a second pressing and rotating mechanism (12) that rotates the second rotating tool (22) in a state where the second shoulder portion (45) of the second rotating tool (22) of the friction stirring tool (10) is pressed against the other side surface of the welding-target portion (6);
a first movement mechanism (13) that moves the first rotating tool (21) to the metal material (5) along the welding-target portion (6) of the metal material (5);
a second movement mechanism (14) that moves the second rotating tool (22) to the metal material (5) along the welding-target portion (6) of the metal material (5); and
a control unit (20) that controls the first pressing and rotating mechanism (11), the second pressing and rotating mechanism (12), the first movement mechanism (13), and the second movement mechanism (14).

10. The friction stir welding device (1, 100, 120) according to Claim 9,
wherein the first movement mechanism (13) and the second movement mechanism (14) move the first rotating tool (21) and the second rotating tool (22) in synchronization with each other along the welding-target portion (6) of the metal material (5).

11. The friction stir welding device (1, 100, 120) according to Claim 9 or 10, further comprising:
a tool load detector (16) that detects a load of the friction stirring tool (10),
wherein based on a detection result of the tool load detector (16), the control unit (20) controls at least one of the first pressing and rotating mechanism (11), the second pressing and rotating mechanism (12), the first movement mechanism (13), and the second movement mechanism (14) so as to decrease the load applied to the friction stirring tool (10).

12. The friction stir welding device (1, 100, 120) according to Claim 11,
wherein the tool load detector (16) has a first power load detector (51) which detects a load applied to a power source of the first movement mechanism (13) and a second power load detector (52) which detects a load applied to a power source of the second movement mechanism (14), and
wherein the control unit (20) controls at least one of the first movement mechanism (13) and the second movement mechanism (14) so as to decrease a difference between the load detected by the first power load detector (51) and the load detected by the second power load detector (52) .

13. The friction stir welding device (1, 100, 120) according to Claim 11,
wherein the tool load detector (16) has a strain detector which detects a strain of the rotation axis (I1, 12) of at least one of the first rotating tool (21) and the second rotating tool (22), and
wherein the control unit (20) controls at least one of the first movement mechanism (13) and the second movement mechanism (14) so as to decrease the strain detected by the strain detector.

14. The friction stir welding device (1, 100, 120) according to Claim 11,
wherein the tool load detector (16) has an operation sound detector which detects an operation sound of the friction stirring tool (10), and
wherein the control unit (20) controls at least one of the first movement mechanism (13) and the second movement mechanism (14) so as to decrease the operation sound detected by the operation sound detector.

15. The friction stir welding device (1, 100, 120) according to Claim 11,
wherein the tool load detector (16) has a vibration detector which detects vibrations of at least one of the first rotating tool (21) and the second rotating tool (22), and
wherein if a vibration mode detected by the vibration detector is a load vibration mode when a load is applied to at least one of first rotating tool (21) and the second rotating tool (22), the control unit (20) controls at least one of the first movement mechanism (13) and the second movement mechanism (14) so that the vibration mode is switched to a vibration mode other than the load vibration mode.

16. A friction stir welding method in which a friction stir welding device (1, 100, 120) according to claim 9 is used so as to weld the welding-target portion (6) of the metal material (5),
the method comprising:
a rotating step of rotating the first rotating tool (21) and the second rotating tool (22) by inserting the first rotating tool (21) into a through-hole previously formed to penetrate a welding starting point from one side of the through-hole, by inserting the second rotating tool (22) into the through-hole from the other side of the through-hole, and by accommodating the protrusion (33, 103) of the first rotating tool (21) in the protrusion accommodating portion (43) of the second rotating tool (22);
a position adjusting step of relatively adjusting each inserting position of the first rotating tool (21) and the second rotating tool (22);
a moving step of moving the first rotating tool (21) and the second rotating tool (22) by the first movement mechanism (13) and the second movement mechanism (14)along the welding-target portion (6) of the metal material (5) from the welding starting point to a welding end point; and
an extracting step of extracting the first rotating tool (21) and the second rotating tool (22) from the welding-target portion (6) in a state where the first rotating tool (21) and the second rotating tool (22) are rotated at the welding end point.

17. The friction stir welding method according to Claim 16,
wherein in the moving step, each position of the first rotating tool (21) and the second rotating tool (22) is relatively adjusted.

18. The friction stir welding method according to Claim 16 or 17,
wherein the through-hole has an inner diameter so that one side gap between the first rotating tool (21) and the through-hole is different from the other side gap between the second rotating tool (22) and the through-hole.

19. The friction stir welding method according to any one of Claims 16 to 18,
wherein at least one of the welding starting point and the welding end point is located on a tab plate (7) which is attached to the metal material (5).

## Patentansprüche

1. Rührreibwerkzeug (10), das Folgendes umfasst:
ein erstes Rotationswerkzeug (21), das für einen Zielschweißabschnitt (6) eines Metallmaterials (5) auf einer Seite des Zielschweißabschnitts (6) angeordnet ist; und
ein zweites Rotationswerkzeug (22), das auf der anderen Seite des Zielschweißabschnitts (6) angeordnet ist, und das derart positioniert ist, dass es dem ersten Rotationswerkzeug (21) zugewandt ist,
wobei das Rotationswerkzeug (21) Folgendes aufweist
einen ersten Werkzeughauptkörper (31) mit einem ersten Schulterabschnitt (35), der mit einer Seitenfläche des Zielschweißabschnitts (6) in Kontakt kommt,
eine erste Sonde (32), die vom ersten Werkzeughauptkörper (31) zum zweiten Rotationswerkzeug (22) vorsteht, und
einen Vorsprung (33), der von der ersten Sonde (32) zum zweiten Rotationswerkzeug (22) vorsteht, und
wobei das zweite Rotationswerkzeug (22) Folgendes aufweist
einen zweiten Werkzeughauptkörper (41) mit einem zweiten Schulterabschnitt (45), der mit der anderen Seitenfläche des Zielschweißabschnitts (6) in Kontakt kommt,
eine zweite Sonde (42), die vom zweiten Werkzeughauptkörper (41) zum ersten Rotationswerkzeug (21) vorsteht, und
einen Vorsprungaufnahmeabschnitt (43), der in der zweiten Sonde (42) positioniert und in der Lage ist, den Vorsprung (33) des ersten Rotationswerkzeugs (21) aufzunehmen, **dadurch gekennzeichnet, dass**
der Vorsprung (103) lösbar an der ersten Sonde (102) befestigt ist,
die erste Sonde (102) ferner ein Befestigungsloch (105) zum Befestigen des Vorsprungs (103) aufweist, und
der Vorsprung (103) einen Flanschabschnitt (113) aufweist, der vom Befestigungsloch (105) nach außen vorsteht und der mit der ersten Sonde (102) in Kontakt kommt.

2. Rührreibwerkzeug (10) nach Anspruch 1,
wobei eine Länge (I) des Vorsprungs (33) in einer Vorsprungsrichtung, verglichen mit einer kombinierten Länge (I) der ersten Sonde (32) und des Vorsprungs (33) in der Vorsprungsrichtung, gleich oder kleiner als 50 % ist.

3. Rührreibwerkzeug (10) nach Anspruch 1 oder 2,
wobei ein Rotationsdurchmesser (r) des Vorsprungs (33), verglichen mit einem Rotationsdurchmesser (R) auf der ersten Rotationswerkzeugseite der zweiten Sonde (42), ein Durchmesser von 40 % bis 80 % ist.

4. Rührreibwerkzeug (10) nach einem der Ansprüche 1 bis 3,
wobei ein vorbestimmter Spalt, der in einen Nichtkontaktzustand gebracht ist, zwischen dem Vorsprung (33) und einer Innenfläche des Vorsprungaufnahmeabschnitts (43), in den der Vorsprung (33) aufgenommen ist, positioniert ist.

5. Rührreibwerkzeug (10) nach einem der Ansprüche 1 bis 4,
wobei der Vorsprungaufnahmeabschnitt (43) einen Kreisquerschnitt aufweist, der entlang einer Ebene orthogonal zu einer Rotationsachse des zweiten Rotationswerkzeugs (22) genommen ist.

6. Rührreibwerkzeug (10) nach einem der Ansprüche 1 bis 5,
wobei der Vorsprung (33) einen polygonen Querschnitt aufweist, der entlang einer Ebene orthogonal zu einer Rotationsachse des ersten Rotationswerkzeugs (21) genommen ist.

7. Rührreibwerkzeug (10) nach einem der Ansprüche 1 bis 6,
wobei der Vorsprung (103) dazu ausgelegt ist, ein Material zu beinhalten, dessen Steifigkeit geringer ist als die der zweiten Sonde (42).

8. Rührreibwerkzeug (10) nach einem der Ansprüche 1 bis 7,
wobei mehrere Arten des Vorsprungs (103) vorbereitet sind, um gemäß der Dicke des Zielschweißabschnitts (6) verschiedene Längen in der Vorsprungsrichtung zu haben.

9. Rührreibschweißvorrichtung (1, 100, 120), die Folgendes umfasst:
das Rührreibwerkzeug (10) nach einem der Ansprüche 1 bis 8;
einen ersten Drück- und Rotationsmechanismus (11), der in einem Zustand, in dem der erste Schulterabschnitt (35) des ersten Rotationswerkzeugs (21) des Rührreibwerkzeugs (10) gegen eine Seitenfläche des Zielschweißabschnitts (6) gedrückt wird, das erste Rotationswerkzeug (21) rotiert;
einen zweiten Drück- und Rotationsmechanismus (12), der in einem Zustand, in dem der zweite Schulterabschnitt (45) des zweiten Rotationswerkzeugs (22) des Rührreibwerkzeugs (10) gegen die andere Seitenfläche des Zielschweißabschnitts (6) gedrückt wird, das zweite Rotationswerkzeug (21) rotiert;
einen ersten Bewegungsmechanismus (13), der das erste Rotationswerkzeug (21) entlang des Zielschweißabschnitts (6) des Metallmaterials (5) zum Metallmaterial (5) bewegt;
einen zweiten Bewegungsmechanismus (14), der das zweite Rotationswerkzeug (22) entlang des Zielschweißabschnitts (6) des Metallmaterials (5) zum Metallmaterial (5) bewegt; und
eine Steuereinheit (20), die den ersten Drück- und Rotationsmechanismus (11), den zweiten Drück- und Rotationsmechanismus (12), den ersten Bewegungsmechanismus (13) und den zweiten Bewegungsmechanismus (14) steuert.

10. Rührreibschweißvorrichtung (1, 100, 120) nach Anspruch 9,
wobei der erste Bewegungsmechanismus (13) und der zweite Bewegungsmechanismus (14) das erste Rotationswerkzeug (21) und das zweite Rotationswerkzeug (22) in Synchronisation miteinander entlang des Zielschweißabschnitts (6) des Metallmaterials (5) bewegen.

11. Rührreibschweißvorrichtung (1, 100, 120) nach Anspruch 9 oder 10, die ferner Folgendes umfasst:
einen Werkzeuglastdetektor (16), der eine Last des Rührreibwerkzeugs (10) detektiert,
wobei die Steuereinheit (20) auf Basis eines Detektionsergebnisses des Werkzeuglastdetektors (16) mindestens eines des ersten Drück- und Rotationsmechanismus (11), des zweiten Drück- und Rotationsmechanismus (12), des ersten Bewegungsmechanismus (13) und des zweiten Bewegungsmechanismus (14) steuert, um die Last, die auf das Rührreibwerkzeug (10) aufgebracht wird, zu verringern.

12. Rührreibschweißvorrichtung (1, 100, 120) nach Anspruch 11,
wobei der Werkzeuglastdetektor (16) einen ersten Stromlastdetektor (51), der eine Last detektiert, die auf eine Stromquelle des ersten Bewegungsmechanismus (13) aufgebracht ist, und einen zweiten Stromlastdetektor (52), der eine Last detektiert, die auf eine Stromquelle des zweiten Bewegungsmechanismus (14) aufgebracht ist, aufweist, und
wobei die Steuereinheit (20) mindestens eines des ersten Bewegungsmechanismus (13) und des zweiten Bewegungsmechanismus (14) steuert, um eine Differenz zwischen der Last, die vom ersten Stromlastdetektor (51) detektiert wird, und der Last, die vom zweiten Stromlastdetektor (52) detektiert wird, zu verringern.

13. Rührreibschweißvorrichtung (1, 100, 120) nach Anspruch 11,
wobei der Werkzeuglastdetektor (16) einen Beanspruchungsdetektor aufweist, der eine Beanspruchung der Rotationsachse (I1, I2) von mindestens einem des ersten Rotationswerkzeugs (21) und des zweiten Rotationswerkzeugs (22) detektiert, und
wobei die Steuereinheit (20) mindestens eines des ersten Bewegungsmechanismus (13) und des zweiten Bewegungsmechanismus (14) steuert, um die Beanspruchung, die vom Beanspruchungsdetektor detektiert wird, zu verringern.

14. Rührreibschweißvorrichtung (1, 100, 120) nach Anspruch 11,
wobei der Werkzeuglastdetektor (16) einen Betriebsgeräuschdetektor aufweist, der ein Betriebsgeräusch des Rührreibwerkzeugs (10) detektiert, und
wobei die Steuereinheit (20) mindestens eines des ersten Bewegungsmechanismus (13) und des zweiten Bewegungsmechanismus (14) steuert, um das Betriebsgeräusch, das vom Betriebsgeräuschdetektor detektiert wird, zu verringern.

15. Rührreibschweißvorrichtung (1, 100, 120) nach Anspruch 11,
wobei der Werkzeuglastdetektor (16) einen Vibrationsdetektor aufweist, der Vibrationen von mindestens einem des ersten Rotationswerkzeugs (21) und des zweiten Rotationswerkzeugs (22) detektiert, und
wobei, wenn ein Vibrationsmodus, der vom Vibrationsdetektor detektiert wird, ein Lastvibrationsmodus ist, wenn eine Last auf mindestens eines des ersten Rotationswerkzeugs (21) und des zweiten Rotationswerkzeugs (22) aufgebracht wird, die Steuereinheit (20) mindestens eines des ersten Bewegungsmechanismus (13) und des zweiten Bewegungsmechanismus (14) derart steuert, dass der Vibrationsmodus in einen anderen Vibrationsmodus als den Lastvibrationsmodus geschaltet wird.

16. Rührreibschweißverfahren, bei dem eine Rührreibschweißvorrichtung (1, 100, 120) nach Anspruch 9 verwendet wird, um den Zielschweißabschnitt (6) des Metallmaterials (5) zu schweißen,
wobei das Verfahren Folgendes umfasst:
einen Rotationsschritt zum Rotieren des ersten Rotationswerkzeugs (21) und des zweiten Rotationswerkzeugs (22) durch Einsetzen des ersten Rotationswerkzeugs (21) von einer Seite eines Durchgangslochs in das Durchgangsloch, das zuvor gebildet wurde, um einen Schweißstartpunkt zu durchdringen, durch Einsetzen des zweiten Rotationswerkzeugs (22) von der anderen Seite des Durchgangslochs in das Durchgangsloch und durch Aufnehmen des Vorsprungs (33, 103) des ersten Rotationswerkzeugs (21) in den Vorsprungaufnahmeabschnitt (43) des zweiten Rotationswerkzeugs (22);
einen Positionsanpassungsschritt zum relativen Anpassen jeder Einsetzposition des ersten Rotationswerkzeugs (21) und des zweiten Rotationswerkzeugs (22);
einen Bewegungsschritt zum Bewegen des ersten Rotationswerkzeugs (21) und des zweiten Rotationswerkzeugs (22) durch den ersten Bewegungsmechanismus (13) und den zweiten Bewegungsmechanismus (14) entlang des Zielschweißabschnitts (6) des Metallmaterials (5) vom Schweißstartpunkt zu einem Schweißendpunkt; und
einen Extraktionsschritt zum Extrahieren des ersten Rotationswerkzeugs (21) und des zweiten Rotationswerkzeugs (22) aus dem Zielschweißabschnitt (6) in einem Zustand, in dem das erste Rotationswerkzeug (21) und das zweite Rotationswerkzeug (22) am Schweißendpunkt rotiert werden.

17. Rührreibschweißverfahren nach Anspruch 16,
wobei beim Bewegungsschritt jede Position des ersten Rotationswerkzeugs (21) und des zweiten Rotationswerkzeugs (22) relativ angepasst wird.

18. Rührreibschweißverfahren nach Anspruch 16 oder 17,
wobei das Durchgangsloch einen Innendurchmesser aufweist, derart, dass sich ein Seitenspalt zwischen dem ersten Rotationswerkzeug (21) und dem Durchgangsloch vom anderen Seitenspalt zwischen dem zweiten Rotationswerkzeug (22) und dem Durchgangsloch unterscheidet.

19. Rührreibschweißverfahren nach einem der Ansprüche 16 bis 18,
wobei sich mindestens einer des Schweißstartpunkts und des Schweißendpunkts auf einer Laschenplatte (7) befindet, die am Metallmaterial (5) angebracht ist.

## Revendications

1. Outil de friction malaxage (10) comprenant :
un premier outil rotatif (21) qui est agencé pour une partie de soudage cible (6) d'un matériau métallique (5), d'un côté de la partie de soudage cible (6) ; et
un second outil rotatif (22) qui est agencé de l'autre côté de la partie de soudage cible (6), et qui est disposé afin de faire face au premier outil rotatif (21),
dans lequel le premier outil rotatif (21) a :
un premier corps principal d'outil (31) ayant une première partie d'épaulement (35) qui vient en contact avec une surface latérale de la partie de soudage cible (6),
une première sonde (32) faisant saillie vers le second outil rotatif (22) à partir du premier corps principal d'outil (31), et
une saillie (33) faisant saillie vers le second outil rotatif (22) à partir de la première sonde (32), et
dans lequel le second outil rotatif (22) a :
un second corps principal d'outil (41) ayant une seconde partie d'épaulement (45) qui vient en contact avec l'autre surface latérale de la partie de soudage cible (6),
une seconde sonde (42) faisant saillie vers le premier outil rotatif (21) à partir du second corps principal d'outil (41), et
une partie de logement de saillie (43) disposée dans la seconde sonde (42) et pouvant loger la saillie (33) du premier outil rotatif (21), **caractérisé en ce que** :
la saillie (103) est fixée de manière détachable sur la première sonde (102),
la première sonde (102) a en outre un trou de fixation (105) pour fixer la saillie (103), et
la saillie (103) a une partie de bride (113) qui fait saillie vers l'extérieur à partir du trou de fixation (105) et qui vient en contact avec la première sonde (102).

2. Outil de friction malaxage (10) selon la revendication 1,
dans lequel une longueur (I) de la saillie (33) dans une direction de saillie est égale ou inférieure à 50 %, par rapport à une longueur combinée (I) de la première sonde (32) et de la saillie (33) dans la direction de saillie.

3. Outil de friction malaxage (10) selon la revendication 1 ou 2,
dans lequel un diamètre de rotation (r) de la saillie (33) est un diamètre représentant de 40 % à 80 % par rapport à un diamètre de rotation (R) du côté du premier outil rotatif de la seconde sonde (42).

4. Outil de friction malaxage (10) selon l'une quelconque des revendications 1 à 3,
dans lequel un espace prédéterminé amené dans un état sans contact est disposé entre la saillie (33) et une surface interne de la partie de logement de saillie (43) dans laquelle la saillie (33) est logée.

5. Outil de friction malaxage (10) selon l'une quelconque des revendications 1 à 4,
dans lequel la partie de logement de saillie (43) a une section transversale circulaire qui est prise le long d'un plan orthogonal à un axe de rotation du second outil rotatif (22).

6. Outil de friction malaxage (10) selon l'une quelconque des revendications 1 à 5,
dans lequel la saillie (33) a une section transversale polygonale qui est prise le long d'un plan orthogonal à un axe de rotation du premier outil rotatif (21).

7. Outil de friction malaxage (10) selon l'une quelconque des revendications 1 à 6,
dans lequel la saillie (103) est configurée pour comprendre un matériau dont la rigidité est inférieure à celle de la seconde sonde (42).

8. Outil de friction malaxage (10) selon l'une quelconque des revendications 1 à 7,
dans lequel plusieurs types de la saillie (103) sont préparés afin d'avoir des longueurs différentes dans la direction de saillie selon l'épaisseur de la partie de soudage cible (6).

9. Dispositif de soudage par friction malaxage (1, 100, 120) comprenant :
l'outil de friction malaxage (10) selon l'une quelconque des revendications 1 à 8 ;
un premier mécanisme de pression et de rotation (11) qui fait tourner le premier outil rotatif (21) dans un état dans lequel la première partie d'épaulement (35) du premier outil rotatif (21) de l'outil de friction malaxage (10) est comprimée contre une surface latérale de la partie de soudage cible (6) ;
un second mécanisme de pression et de rotation (12) qui fait tourner le second outil rotatif (22) dans un état dans lequel la seconde partie d'épaulement (45) du second outil rotatif (22) de l'outil de friction malaxage (10) est comprimée contre l'autre surface latérale de la partie de soudage cible (6) ;
un premier mécanisme de déplacement (13) qui déplace le premier outil rotatif (21) vers le matériau métallique (5) le long de la partie de soudage cible (6) du matériau métallique (5) ;
un second mécanisme de déplacement (14) qui déplace le second outil rotatif (22) vers le matériau métallique (5) le long de la partie de soudage cible (6) du matériau métallique (5) ; et
une unité de commande (20) qui commande le premier mécanisme de pression et de rotation (11), le second mécanisme de pression et de rotation (12), le premier mécanisme de déplacement (13) et le second mécanisme de déplacement (14).

10. Dispositif de soudage par friction malaxage (1, 100, 120) selon la revendication 9,
dans lequel le premier mécanisme de déplacement (13) et le second mécanisme de déplacement (14) déplacent le premier outil rotatif (21) et le second outil rotatif (22) en synchronisation l'un avec l'autre le long de la partie de soudage cible (6) du matériau métallique (5).

11. Dispositif de soudage par friction malaxage (1, 100, 120) selon la revendication 9 ou 10, comprenant en outre :
un détecteur de charge d'outil (16) qui détecte une charge de l'outil de friction malaxage (10),
dans lequel, sur la base d'un résultat de détection du détecteur de charge d'outil (16), l'unité de commande (20) commande au moins l'un parmi le premier mécanisme de pression et de rotation (11), le second mécanisme de pression et de rotation (12), le premier mécanisme de déplacement (13) et le second mécanisme de déplacement (14) afin de réduire la charge appliquée sur l'outil de friction malaxage (10).

12. Dispositif de soudage par friction malaxage (1, 100, 120) selon la revendication 11,
dans lequel le détecteur de charge d'outil (16) a un premier détecteur de charge d'alimentation (51) qui détecte une charge appliquée sur une source d'alimentation du premier mécanisme de déplacement (13) et un second détecteur de charge d'alimentation (52) qui détecte une charge appliquée sur une source alimentation du second mécanisme de déplacement (14), et
dans lequel l'unité de commande (20) commande au moins l'un parmi le premier mécanisme de déplacement (13) et le second mécanisme de déplacement (14) afin de réduire une différence entre la charge appliquée par le premier détecteur de charge d'alimentation (51) et la charge détectée par le second détecteur de charge d'alimentation (52).

13. Dispositif de soudage par friction malaxage (1, 100, 120) selon la revendication 11,
dans lequel le détecteur de charge d'outil (16) a un détecteur de déformation qui détecte une déformation de l'axe de rotation (I1, I2) d'au moins l'un parmi le premier outil rotatif (21) et le second outil rotatif (22), et
dans lequel l'unité de commande (20) commande au moins l'un parmi le premier mécanisme de déplacement (13) et le second mécanisme de déplacement (14) afin de réduire la déformation détectée par le détecteur de déformation.

14. Dispositif de soudage par friction malaxage (1, 100, 120) selon la revendication 11,
dans lequel le détecteur de charge d'outil (16) a un détecteur de son de fonctionnement qui détecte un son de fonctionnement de l'outil de friction malaxage (10), et
dans lequel l'unité de commande (20) commande au moins l'un parmi le premier mécanisme de déplacement (13) et le second mécanisme de déplacement (14) afin de réduire le son de fonctionnement détecté par le détecteur de son de fonctionnement.

15. Dispositif de soudage par friction malaxage (1, 100, 120) selon la revendication 11,
dans lequel le détecteur de charge d'outil (16) a un détecteur de vibrations qui détecte les vibrations d'au moins l'un parmi le premier outil rotatif (21) et le second outil rotatif (22), et
dans lequel si un mode de vibration détecté par le détecteur de vibrations est un mode de vibration de charge lorsqu'une charge est appliquée sur au moins l'un parmi le premier outil rotatif (21) et le second outil rotatif (22), l'unité de commande (20) commande au moins l'un parmi le premier mécanisme de déplacement (13) et le second mécanisme de déplacement (14) de sorte que le mode de vibration est commuté sur un mode de vibration différent du mode de vibration de charge.

16. Procédé de soudage par friction malaxage dans lequel un dispositif de soudage par friction malaxage (1, 100, 120) selon la revendication 9 est utilisé afin de souder la partie de soudage cible (6) du matériau métallique (5),
le procédé comprenant :
une étape de rotation pour faire tourner le premier outil rotatif (21) et le second outil rotatif (22) en insérant le premier outil rotatif (21) dans un trou débouchant préalablement formé pour pénétrer dans un point initial de soudage depuis un côté du trou débouchant, en insérant le second outil rotatif (22) dans le trou débouchant à partir de l'autre côté du trou débouchant, et en logeant la saillie (33, 103) du premier outil rotatif (21) dans la partie de logement de saillie (43) du second outil rotatif (22) ;
une étape d'ajustement de position pour ajuster relativement chaque position d'insertion du premier outil rotatif (21) et du second outil rotatif (22) ;
une étape de déplacement pour déplacer le premier outil rotatif (21) et le second outil rotatif (22) par le premier mécanisme de déplacement (13) et le second mécanisme de déplacement (14) le long de la partie de soudage cible (6) du matériau métallique (5) du point initial de soudage jusqu'à un point final de soudage ; et
une étape d'extraction pour extraire le premier outil rotatif (21) et le second outil rotatif (22) de la partie de soudage cible (6) dans un état dans lequel le premier outil rotatif (21) et le second outil rotatif (22) sont entraînés en rotation au point final de soudage.

17. Procédé de soudage par friction malaxage selon la revendication 16,
dans lequel à l'étape de déplacement, chaque position du premier outil rotatif (21) et du second outil rotatif (22) est ajustée de manière relative.

18. Procédé de soudage par friction malaxage selon la revendication 16 ou 17,
dans lequel le trou débouchant a un diamètre interne de sorte qu'un espace latéral entre le premier outil rotatif (21) et le trou débouchant est différent de l'autre espace latéral entre le second outil rotatif (22) et le trou débouchant.

19. Procédé de soudage par friction malaxage selon l'une quelconque des revendications 16 à 18,
dans lequel au moins l'un parmi le point initial de soudage et le point final de soudage est positionné sur une plaque de languette (7) qui est fixée sur le matériau métallique (5).
